(19) Europäisches Patentamt
European Patent Office
Office européen des brevets

(11) **EP 3 527 040 B1**

(12) **EUROPÄISCHE PATENTSCHRIFT**

(45) Veröffentlichungstag und Bekanntmachung des Hinweises auf die Patenterteilung:
**02.12.2020 Patentblatt 2020/49**

(51) Int Cl.:
***H05B 1/02*** *(2006.01)*      ***B29C 51/42*** *(2006.01)*

(21) Anmeldenummer: **17755431.8**

(22) Anmeldetag: **03.08.2017**

(86) Internationale Anmeldenummer:
**PCT/EP2017/069612**

(87) Internationale Veröffentlichungsnummer:
**WO 2018/072906 (26.04.2018 Gazette 2018/17)**

(54) **VERFAHREN UND VORRICHTUNG ZUR HERSTELLUNG VON FORMTEILEN MIT EINEM HALBZEUG**

METHOD AND DEVICE FOR MANUFACTURING MOLDED PARTS FROM SEMI-FINISHED PARTS

MÉTHODE ET DISPOSITIF POUR LA FABRICATION DE PIÈCES MOULÉES À PARTIR DE PIÈCES SEMI-FINIES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.10.2016 DE 102016119703**

(43) Veröffentlichungstag der Anmeldung:
**21.08.2019 Patentblatt 2019/34**

(73) Patentinhaber: **KraussMaffei Technologies GmbH 80997 München (DE)**

(72) Erfinder:
• **MOSER, Stefan 85399 Hallbergmoos (DE)**

• **KRAUS, Dietmar 85777 Weng (DE)**
• **SCHIERL, Stefan 82110 Germering (DE)**

(74) Vertreter: **Wilhelm, Ludwig KraussMaffei Group GmbH Krauss-Maffei-Strasse 2 80997 München (DE)**

(56) Entgegenhaltungen:
**EP-A1- 0 564 354**      **CA-A1- 2 545 440**
**DE-A1-102014 010 173**

**Beschreibung**

Die Erfindung betrifft ein Verfahren zur Herstellung von Formteilen, wobei ein oder mehrere Halbzeuge in einer Heizvorrichtung erhitzt und nachfolgend einer Formgebungsmaschine zugeführt werden. Bevorzugtes Anwendungsgebiet der Erfindung ist die Herstellung von Kunststoff-Formteilen, welche jeweils ein Halbzeug aufweisen, das mit einem Kunststoffmaterial versehen ist. Ein Halbzeug im Sinne der vorliegenden Erfindung kann jedes beliebige Bauteil sein, das mit einer Heizvorrichtung in einen Zustand gebracht werden kann, in welchem es in einem nachfolgenden Schritt umgeformt werden kann. Insbesondere kann ein Halbzeug ein sogenanntes "Organoblech" sein. Als "Organoblech" wird üblicherweise ein Bauteil verstanden, welches aus einer oder mehreren Lagen Gewebe (bspw. Glasfaser, Carbonfaser oder Naturfaser) besteht, die mit thermoplastischem Matrixmaterial (bspw. Polypropylen oder Polyamid) imprägniert sind.

Aus der DE 10 2014 010 173 A1 ist es bekannt, ein Halbzeug einer Heizvorrichtung zuzuführen und darin auf eine Temperatur zu erhitzen, bei der das Halbzeug in einem nachfolgenden Schritt umgeformt und gegebenenfalls mit einem Kunststoffmaterial umspritzt werden kann. Bei dieser Heizvorrichtung sind zwei Heizstrahler voneinander beabstandet gegenüberliegend angeordnet. Es wird somit ein Heizbereich gebildet, der nach oben und nach unten von den Heizstrahlern begrenzt wird und an seinen Seiten offen ist. Ein Halbzeug wird mit Hilfe eines Spannrahmens oder auf einer Drahtauflage entlang eines geradlinigen Transportweges durch den Heizbereich hindurch verfahren. Auf der einen Seite der Heizvorrichtung wird das Halbzeug außerhalb der Heizvorrichtung bereitgestellt und mittels des Spannrahmens oder der Drahtauflage in den Heizbereich der Heizvorrichtung eingefahren. Dort wird das Halbzeug angehalten und mittels der Strahlung der Heizstrahler auf eine gewünschte Temperatur erhitzt. Nachfolgend wird das Halbzeug mittels des Spannrahmens oder der Drahtauflage weiter transportiert und auf der gegenüberliegenden Seite aus dem Heizbereich und somit aus der Heizvorrichtung herausgefahren. Anschließend kann das so vorgeheizte Halbzeug mittels geeigneter Greifvorrichtungen zu einer Formgebungsmaschine wie beispielsweise einer Spritzgießmaschine, transportiert werden. Aufgrund der offenen Seiten ist die Heizvorrichtung in energetischer Sicht ungünstig und die Herstellung von Formteilen unter Verwendung dieser Heizvorrichtung mit entsprechend höheren Kosten verbunden.

Aus dem Stand der Technik ist es ferner bekannt, eine Heizvorrichtung zu verwenden, die ein geschlossenes Gehäuse mit einer Tür und Heizstrahler im Inneren des Gehäuses aufweist, insbesondere Infrarot-Heizstrahler. Das Halbzeug wird bei geöffneter Tür in das Innere des Gehäuses eingebracht, die Tür nachfolgend verschlossen. Das Halbzeug wird mit der von den Heizstrahlern erzeugten Wärmestrahlung beaufschlagt und erhitzt. Nachfolgend wird die Tür des Gehäuses geöffnet und das vorgewärmte Halbzeug aus dem Gehäuse entnommen. Dabei kann das Öffnen der Tür und die Entnahme des Halbzeugs in Abhängigkeit von einer vorgebbaren Zeitdauer der Erwärmung erfolgen oder in Abhängigkeit einer zu erreichenden vorgebbaren Temperatur des Halbzeugs. Diese Art der Heizvorrichtung ist zwar aus energetischer Sicht günstiger als diejenige aus dem vorgenannten Stand der Technik. Nachteilig ist jedoch, dass sich beim Betrieb der Heizvorrichtung das Innere des Gehäuses unerwünscht stark aufheizt und dass zudem eine inhomogene Temperaturverteilung im Innern des Gehäuses auftritt, die sich nachteilig auf das Aufheizen des Halbzeugs auswirkt.

Eine Heizvorrichtung der vorgenannten Art ist aus CA 2 545 440 A1 bekannt, wobei im Innern des Gehäuses eine der thermischen Konvektion entgegengesetzte Luftströmung erzeugt wird, nämlich eine Luftströmung, welche im Innern des Gehäuses im Wesentlichen von oben nach unten gerichtet ist. Mit dieser Heizvorrichtung kann ein ungleichmäßiges Erhitzen oder eine Überhitzung von Halbzeug im Innern des Gehäuses vermieden werden.

Ausgehend hiervon liegt der Erfindung die Aufgabe zugrunde, ein Verfahren zur Herstellung von Formteilen anzugeben, bei dem ein oder mehrere Halbzeuge energieeffizient und homogen in einer Heizvorrichtung erhitzt und nachfolgend einer Formgebungsmaschine zugeführt werden.

Die Lösung der zuerst genannten Aufgabe erfolgt durch ein Verfahren mit den Merkmalen von Anspruch 1. Vorteilhafte Ausgestaltungen und Weiterbildungen der Erfindungen sind in den abhängigen Ansprüchen angegeben.

Dadurch, dass im Innern des Gehäuses eine der thermischen Konvektion entgegenwirkende Luftströmung erzeugt wird, insbesondere eine Luftströmung, welche im Innern des Gehäuses im Wesentlichen von oben nach unten gerichtet ist, wird verhindert, dass sich das Innere des Gehäuses im oberen Bereich durch aufsteigende Luft stärker erhitzt als im unteren Bereich. Dadurch wird es möglich, die Temperatur im Innern des Gehäuses auf einem konstanten Niveau zu halten. Infolgedessen kann das Halbzeug homogen erhitzt werden. Insbesondere wird es damit möglich, dass das Halbzeug auf seiner gesamten Oberfläche eine homogene Temperaturverteilung aufweist.

Für die Luftströmung kann vorliegend die atmosphärische Luft verwendet werden. Grundsätzlich ist es aber auch möglich, ein anderes Gas zu verwenden, um die hier gewünschte Luftströmung zu erzeugen. Unter dem Begriff "Luft" soll vorliegend also jedwedes gasförmige Fluid verstanden werden, auch wenn vorzugsweise atmosphärische Luft zum Einsatz kommen soll.

Das Halbzeug kann in einer vertikalen oder in einer horizontalen Lage in dem Ofen aufgeheizt werden.

Das Halbzeug kann lediglich umgeformt werden, z.B. in einer Presse. Es kann aber auch umgeformt und mit einem weiteren Material, insbesondere einem Kunststoffmaterial versehen werden, z.B. in einer Spritzgießmaschine.

Unter Formgebungsmaschine ist damit jede Maschine zu verstehen, in welcher das erhitzte Halbzeug nur umgeformt oder umgeformt und mit einem weiteren Material versehen werden kann, insbesondere mit einem Kunststoffmaterial.

Erfindungsgemäß wird die der thermischen Konvektion entgegenwirkende Luftströmung in Abhängigkeit von der Temperaturdifferenz ($T_o$ - $T_u$) zwischen der Temperatur $T_o$ im oberen Bereich des Gehäuses und der Temperatur $T_u$ im unteren Bereich des Gehäuses geregelt, wobei die Regelung der Luftströmung vorzugsweise in der Weise erfolgt, dass die Temperaturdifferenz möglichst gering ist. Die erzielbare Temperaturdifferenz hängt unter anderem auch von der Größe des Gehäuses ab. Eine Temperaturdifferenz von nahe 0°C wäre optimal, lässt sich in der Praxis aber eher bei einem relativ kleinen Gehäuse realisieren. Vorzugsweise sollte die Temperaturdifferenz kleiner sein als 15°C, vorzugsweise kleiner als 10°C und ganz besonders bevorzugt kleiner als 5°C sein. Ohne die der thermischen Konvektion entgegenwirkende Luftströmung würde sich in dem Gehäuse eine relativ hohe Temperaturdifferenz einstellen. Diese kann je nach Gehäuse 50°C und mehr betragen. Dabei kann die Temperatur $T_o$ im oberen Bereich des Gehäuses und die Temperatur $T_u$ im unteren Bereich des Gehäuses gemessen werden, insbesondere die Temperaturen ($T_o$, $T_u$) auf der jeweiligen Innenseite von Gehäusedeckel und Gehäuseboden.

Die Luftströmung kann insbesondere als Umluftströmung ausgebildet werden, wobei zur Umwälzung der Luft ein oder mehrere Luftkanäle mit jeweils einem oder mehreren Ventilatoren verwendet werden. Dabei kann die Luft im Bereich des Gehäusebodens, insbesondere über eine oder mehrere Öffnungen im Gehäuseboden, aus dem Inneren des Gehäuses abgesaugt, und die abgesaugte Luft über den oder die Luftkanäle auf die Oberseite des Gehäuses geleitet werden. Die Luft kann dann im oberen Bereich des Gehäuses, insbesondere über eine oder mehrere Öffnungen im Gehäusedeckel, in das Innere des Gehäuses zurückgeführt werden.

Der oder die Ventilatoren sind vorzugsweise drehzahlgeregelt über einen Umrichter betreibbar. Je nachdem, wie sich die Temperaturdifferenz ($T_o$ - $T_u$) verändert, kann die Drehzahl von einem oder mehreren Ventilatoren automatisch angepasst werden. Bei Zunahme der Temperaturdifferenz wird die Drehzahl erhöht und bei Rückgang der Temperaturdifferenz wieder erniedrigt.

Es kann auch vorgesehen werden, dass "Druckluft" in das Gehäuse eingebracht wird, um eine Luftströmung zu erzeugen, die der thermischen Konvektion entgegengerichtet ist. Hierzu können in dem Gehäuse, insbesondere im unteren Bereich des Gehäuses, eine oder mehrere Düsen vorgesehen werden, die an eine geeignete Druckluftquelle angeschlossen sind. Ferner sind Regelungsmittel, beispielsweise eine Ventileinrichtung, vorgesehen, um den Druck und die Menge der in das Gehäuse einströmenden Druckluft regeln zu können. Je nachdem, wie sich die Temperaturdifferenz ($T_o$ - $T_u$) verändert, kann die Menge bzw. der Druck an einer oder mehreren der Druckluftdüsen automatisch angepasst werden. Bei Zunahme der Temperaturdifferenz werden Druck und / oder Menge erhöht und bei Rückgang der Temperaturdifferenz wieder erniedrigt.

Alternativ zu dem vorgenannten Umluftbetrieb und/oder Druckluftbetrieb oder zusätzlich dazu kann vorgesehen werden, dass bei Überschreiten einer vorgebbaren Ofenbetriebstemperatur $T_{Betrieb}$ im Innern des Gehäuses eine Zufuhr von Frischluft in das Innere des Gehäuses vorgesehen wird. Die Ofenbetriebstemperatur wird vorzugsweise im oberen Bereich des Gehäuses, insbesondere auf der Innenseite des Gehäusedeckels, gemessen. Anders ausgedrückt ist im oberen Bereich des Gehäuses, insbesondere auf der Innenseite des Gehäusedeckels ein Temperatursensor zur Ermittlung einer aktuellen Temperatur $T_o$ (t) bzw. einer aktuellen Ofenbetriebstemperatur $T_{Betrieb}$ (Ist) vorgesehen, welche mit der vorgegebenen Ofenbetriebstemperatur $T_{Betrieb}$ (Soll) verglichen wird.

Ferner kann vorgesehen werden, dass bei Überschreiten einer vorgebbaren Ofenbetriebstemperatur $T_{Betrieb}$ (Soll) im Innern des Gehäuses eine oder mehrere am Gehäuse vorgesehene Klappen und/oder eine oder mehrere am Gehäuse vorgesehene Türen geöffnet werden, wobei vorzugsweise die im oberen Bereich des Gehäuses, insbesondere die auf der Innenseite des Gehäusedeckels, gemessene Temperatur $T_o$ (Ist) bzw. die aktuelle Ofenbetriebstemperatur $T_{Betrieb}$ (Ist) mit der vorgegebenen Ofenbetriebstemperatur $T_{Betrieb}$ (Soll) verglichen wird. Das Öffnen von Klappen und/oder Türen kann alternativ oder zusätzlich zu Frischluftzufuhr und/oder Umluftbetrieb und/oder Druckluftbetrieb vorgesehen werden.

Insgesamt können also die Maßnahmen "Umluftbetrieb", "Druckluftbetrieb", "Frischluftzufuhr", "Öffnen von Klappen und/oder Türen" beliebig miteinander kombiniert werden.

Gemäß einer bevorzugten Ausführungsform der Erfindung können in dem Gehäuse mehrere, unabhängig voneinander betreibbare Heizstrahler und mehrere Regelzonen $R_n$ vorgesehen werden, wobei jeder Regelzone $R_n$ genau ein Temperatursensor $TS_n$, insbesondere ein Pyrometer, zugeordnet ist. Für eine Regelzone ist immer genau ein Temperatursensor vorhanden.

Alternativ kann für die Temperaturerfassung eine Thermokamera eingesetzt werden. Auf dem gemessen Thermobild können mehrere Messstellen/Messbereiche definiert werden. An jeder Messstelle kann die Temperatur erfasst werden. Beim Einsatz einer Thermokamera wird jeder Regelzone eine auf dem Thermobild definierte Messstelle zugeordnet. Jeder Regelzone ist somit genau eine Messstelle zugeordnet. Diese eine Messstelle entspricht sozusagen dem oben genannten einen Temperatursensor TSn, welcher der Regelzone Rn zugeordnet ist.

Eine Regelzone kann somit in der Weise definiert werden, dass für diese Regelzone immer genau ein einziger aktiver Temperatursensor bzw. ein einziges aktives Pyrometer vorhanden ist, um die vom Einlegeteil emittierte Wärmestrahlung aus demjenigen Bereich des Einlegeteils zu erfassen, der sich vor der Linse dieses Pyrometers befindet. Jeder Regelzone ist somit exakt ein aktiver Temperatursensor bzw. ein aktives Pyrometer zugeordnet und umgekehrt. "Aktiv" bedeutet folgendes: In einer Regelzone könnten mehrere Pyrometer physisch vorhanden sein, aber nur ein einziges Pyrometer wird als Messmittel für die Temperaturregelung benutzt und ist somit "aktiv". Denkbar wäre zum Beispiel, dass man neben einem ersten Pyrometer, welches benutzt wird und somit "aktiv" ist, ein zweites Pyrometer als Ersatz bereitstellt, um im Falle des Ausfalls des ersten aktiven Pyrometers die Produktion weiterbetreiben zu können, wobei dann das zweite Pyrometer "aktiv" geschaltet wird. Das zweite "inaktive" Pyrometer könnte aber auch als Referenzmessung zu dem ersten "aktiven" Pyrometer dienen.

Die Anzahl der Heizstrahler, die einer Regelzone zugeordnet sind, ist variabel. In vielen Fällen ist einer Regelzone ein einziger Heizstrahler zugeordnet. Es kann jedoch auch so sein, dass einer Regelzone mehrere Heizstrahler zugeordnet sind. Jeder Regelzone $R_n$ können somit ein oder mehrere Heizstrahler zugeordnet sein.

In jeder Regelzone $R_n$ kann der aktuelle Temperatur-Istwert $T_n(t)$ der Temperatur von derjenigen Oberfläche des Halbzeugs gemessen werden, welche dem oder den Heizstrahler(n) zugewandt ist, die der Regelzone $R_n$ zugeordnet sind. Für diese Oberfläche kann ein Temperatur-Sollwert $T_n(soll)$ vorgegeben und die Differenz zwischen dem Temperatur-Sollwert $T_n(soll)$ und dem gemessenen aktuellen Temperatur-Istwert $T_n(t)$ für diese Oberfläche des Halbzeugs in der Regelzone $R_n$ gebildet und somit für jede Regelzone $R_n$ ein aktueller Differenzwert $\Delta_n(t)$ (= aktuelles Temperatur-Delta in der Regelzone $R_n$) ermittelt werden. Ausgehend hiervon kann diejenige Regelzone ermittelt wird, für die der aktuelle Differenzwert $\Delta_n(t)$ am größten ist und somit kann eine Regelzone $R_n$ mit einem aktuellen Maximal-Differenzwert $\Delta_n(t)$ (= Temperatur-Delta-Maximum) vorliegen. Die Heizstrahler der anderen Regelzonen können in Abhängigkeit von dem jeweils aktuellen Maximal-Differenzwert $\Delta_n(t)$ betrieben werden. Vorzugsweise kann ein geregelter Betrieb vorgesehen werden. Man kann auch von einer "Master-Slave-Regelung" sprechen, wie sie im Prinzip aus der Computertechnologie bekannt ist. Die Regelzone mit dem Maximal-Differenzwert $\Delta_n(t)$ bildet sozusagen den "Master" und die übrigen Regelzonen jeweils einen "Slave".

Mit den vorgenannten Maßnahmen kann ein gleichmäßiges Erhitzen aller in der Heizvorrichtung vorhandenen Halbzeuge erzielt werden. Außerdem wird die Homogenität der Temperaturverteilung bei jedem einzelnen Halbzeug für sich gesehen und über alle Halbzeuge hinweg gesehen verbessert.

Insbesondere in folgenden Fallkonstellationen kann das synchrone Aufheizen der Halbzeuge nach der vorgenannten "Master-Slave-Regelung" vorteilhaft sein:

a) Falls ein Halbzeug nicht exakt mittig zwischen zwei sich gegenüberliegenden Heizstrahlern positioniert ist, wird eine Seite des Halbzeugs bzw. eine Oberfläche des Halbzeugs schneller aufgeheizt, nämlich die Seite oder Oberfläche mit dem geringeren Abstand zum Heizstrahler. Der Energieeintrag in das Halbzeug steigt exponentiell mit abnehmendem Abstand, so dass selbst geringfügige Abweichungen von der exakt mittigen Positionierung sich nachteilig auswirken. Bereits Abweichungen im Bereich von einigen Millimetern können relevant werden.

b) Wenn in dem Gehäuse der Heizvorrichtung mehrere Heizstrahler über- und/oder nebeneinander angeordnet sind und mehrere Regelzonen $R_n$ und Temperatursensoren $TS_n$ vorgesehen sind, um ein einziges Halbzeug zu erhitzen, kann jeder Heizstrahler getrennt geregelt werden und alle Regelzonen Rn erreichen gleichzeitig ihre jeweilige Solltemperatur. Dadurch wird ein gleichmäßiges Aufheizen des Halbzeugs bewirkt.

c) Wenn in dem Gehäuse der Heizvorrichtung mehrere Heizstrahler über- und/oder nebeneinander angeordnet sind und mehrere Regelzonen $R_n$ und Temperatursensoren $TS_n$ vorgesehen sind, um gleichzeitig mehrere Halbzeuge zu erhitzen, können für jedes der gleichzeitig zu erhitzenden Halbzeuge unterschiedliche Solltemperaturen eingestellt werden und die jedem dieser Halbzeuge zugeordneten Regelzonen können unabhängig voneinander geregelt und jedes dieser Halbzeuge kann auf eine eigene Solltemperatur erhitzt werden. Dies könnte beispielsweise dann der Fall sein, wenn unterschiedliche Halbzeuge in der Heizvorrichtung erhitzt werden sollen. Denkbar ist beispielsweise, dass die gleichzeitig zu erhitzenden Halbzeuge aus dem gleichen Material bestehen, aber unterschiedlich dick sind. Ebenso ist denkbar, dass die gleichzeitig zu erhitzenden Halbzeuge die gleiche Dicke aufweisen, aber aus verschiedenen Materialien bestehen. Unterschiede in der Solltemperatur von gleichzeitig in der Heizvorrichtung zu erhitzenden Halbzeugen können auch dann von Vorteil sein, wenn die an sich gleichen Halbzeuge in einem nachfolgenden Umformvorgang unterschiedlich umgeformt werden sollen, um verschieden umgeformte Halbzeuge zu erhalten. Da unterschiedliche Solltemperaturen zu unterschiedlichen Aufheizzeiten führen, würde ein Halbzeug mit einer niedrigen Solltemperatur eine längere Zeit lang erhitzt werden und somit eine längere Durchwärmzeit erfahren. Dies ist jedoch nicht erwünscht, da dadurch eine thermische Degradation am Halbzeug auftreten kann und die gewünschten mechanischen Eigenschaften nicht mehr erreicht werden. Daher ist es wünschenswert, dass trotz unterschiedlicher Solltemperaturen alle Halbzeuge synchron auf ihre jeweilige Solltemperatur erhitzt werden.

Gemäß einer regelungstechnisch bevorzugten Ausführungsform der Erfindung können Zeitabschnitte , nachfolgend Periodendauer genannt, mit einer vorgebbaren Einschaltzeitdauer, nachfolgend Pulsdauer genannt, vorgegeben werden, wobei die so gebildeten Zeitabschnitte jeweils eine Periodendauer für eine Pulsweitenmodulation darstellen, wobei eine Periodendauer vorzugsweise kleiner als 1 Sekunde ist, insbesondere kleiner als 500 Millisekunden und ganz besonders bevorzugt kleiner oder gleich 200 Millisekunden ist, so dass ein oder mehrere oder alle einer Regelzone $R_n$ zugeordnete Heizstrahler in Bezug auf eine Periodendauer für eine vorgebbare Pulsdauer betrieben werden und für den Rest der Periodendauer ausgeschaltet bleiben, so dass sich in Bezug auf die Periodendauer eine aktuelle Pulsdauer ED von dem einen oder den mehreren oder allen Heizstrahler(n) in der Regelzone $R_n$ in einer Periodendauer ergibt.

Bei der Pulsweitenmodulation wird innerhalb einer PWM-Periodendauer eine Ein- und Ausschaltdauer (Pulsdauer) für den Leistungssteller (SSR Solid State Relais) für den Heizvorgang einer Regelzone $R_n$ vorgegeben, insbesondere berechnet. Ein Regler vergleicht in jeder Regelzone $R_n$ den aktuellen Temperatur-Istwert $T_n(t)$ der Temperatur von der Oberfläche des Halbzeugs mit einem vorgegebenen ein Temperatur-Sollwert $T_n(soll)$ und erzeugt daraus ein Stellsignal von 0...100% für die Pulsweitenmodulation eines Heizstrahlers zu dieser Regelzone $R_n$.

Dabei sollte der Regler innerhalb dieser Periodendauer mehrfach neue Pulsdauer Zeiten während einer Periodendauer berechnen.

Je nach Anwendungsfall kann die Anzahl an gleichzeitig zu erhitzenden Halbzeugen kleiner sein als die Anzahl der vorhandenen Heizstrahler und/oder die Gesamtfläche des oder der Halbzeuge kann kleiner sein als die von den vorhandenen Heizstrahlern beaufschlagbare Fläche, so dass es Heizstrahler gibt, die nicht benötigt werden. In einem solchen Fall sollten die den nicht benötigten Heizstrahlern zugeordneten Regelzonen bei dem Betrieb der übrigen Heizstrahler bei der Ermittlung des aktuellen Maximal-Differenzwerts $\Delta_n(t)$ unberücksichtigt bleiben.

Vorzugsweise kann ein übergeordneter Regler verwendet werden, mit dem alle aktiven Regelzonen $R_n$ überwacht werden. Dabei kann von Zeit zu Zeit, insbesondere bei einem geregeltem Betrieb in jeder Periodendauer, die Regelzone $R_n(max)$ mit dem aktuellen Maximal-Differenzwert $\Delta_n(t)$ (= Temperatur-Delta-Maximum) ermittelt wird und diese Regelzone $R_n(max)$ als Master-Regelzone für den Betrieb der Heizstrahler der anderen Regelzonen verwendet werden. Dabei kann die Einschaltdauer ED der Heizstrahler(n) der anderen Regelzone $R_n$ wie folgt berechnet werden:

$$ED_n(t) = ED_n(max) - ED_n\Delta(t),$$

wobei:

$$ED_n\Delta(t) = ED_n(max) \times V_{synch} \times [\Delta T(max) - \Delta T_n(t)]$$

und wobei die Bestandteile dieser Formel folgende Bedeutung aufweisen:

$ED_n\Delta(t)$ = aktuell ermittelter Differenzwert an ED für den einen oder die mehreren oder alle Heizstrahler der Regelzone $R_n$

$V_{synch}$ = Verstärkungsfaktor (wird aus der maximalen Steigung einer geeigneten Regelstrecke und der Totzeit dieser Regelstrecke zur Regelzone Rn berechnet)

$\Delta T(max)$ = Maximal-Differenzwert $\Delta_n(t)$ gemäß Anspruch 7

$\Delta T_n(t)$ = aktueller Differenzwert $\Delta_n(t)$ gemäß Anspruch 7.

Die Anwendung dieser Formel führt dazu, dass schnellere Zonen in Abhängigkeit vom Temperaturdelta $\Delta T_n(t)$ der Regelzone $R_n$ in ihrer Leistung soweit reduziert werden, dass sie der Masterzone automatisch in der Aufheizcharakteristik folgen, und somit alle aktiven Regelzonen $R_n$ synchron zueinander aufgeheizt werden, das heißt, das alle aktiven Regelzonen $R_n$ ihren Sollwert zur gleichen Zeit erreichen.

Es können Heizstrahler verwendet werden, die aus einer Mehrzahl von Heizstrahler-Segmenten zusammengesetzt sind, wobei die Heizstrahler-Segmente eines Heizstrahlers unabhängig voneinander geregelt und betrieben werden können. Damit kann die von einem Heizstrahler zu beaufschlagende Oberfläche eines Halbzeugs individuell erhitzt werden, d.h. es können mit einem Heizstrahler unterschiedliche Bereiche eines Halbzeugs auf verschiedene Art und Weise erhitzt werden. Beispielsweise wird ein Halbzeug in einem Teilbereich um einige Grad stärker erwärmt, um in diesen Bereich eine bessere Anbindung des Materials beim nachgelagerten Spritzgießprozess zu erhalten. Ebenso wird bspw. ein Teilbereich stärker erwärmt, um im nachfolgenden Umformvorgang eine stärkere / komplexere Umformung erreichen zu können.

In bevorzugter Weise kann das Halbzeug zwischen einander gegenüberliegenden Heizstrahlern positioniert werden, wobei insbesondere zu beiden Seiten des Halbzeugs der gleiche Abstand zwischen Halbzeug und Heizstrahler vorliegt. Mit anderen Worten würde das Halbzeug exakt mittig zwischen den sich gegenüberliegenden Heizstrahlern positioniert werden.

Weiterhin wird es als vorteilhaft angesehen, wenn vor Beginn des Herstellungsverfahrens oder vor der Wiederaufnahme des Herstellungsverfahrens nach einer Produktionsunterbrechung ein Vorwärmen der Heizvorrichtung erfolgt, wobei das Innere des Gehäuses auf eine Vorwärmtemperatur $T1_{vor}$ aufgeheizt wird, welche unterhalb einer vorgebbaren Ofenbetriebstemperatur $T_{Betrieb}$ liegt. Dabei kann vorzugsweise eine für den vollautomatischen Betrieb der Heizvorrichtung und/oder eine auf das Halbzeug abgestimmte Temperatur als Ofenbetriebstemperatur $T_{Betrieb}$ zugrunde gelegt werden. Durch das Vorwärmen kann die Produktion unmittelbar im Anschluss an das Vorwärmen im Automatikmodus gestartet werden. Dadurch werden Anfahrteile vermieden und Kosten gespart, wie dies ohne das Vorwärmen der Fall wäre. Sollte es an der Formgebungsmaschine zu einer Produktionsunterbrechung kommen, so kann die Heizvorrichtung bei Unterschreiten der vorgegebenen Vorwärmtemperatur $T1_{vor}$ automatisch in ein Vorwärmprogramm gehen. Dies verhindert ein übermäßiges Abkühlen der Heizvorrichtung. Infolgedessen kann eine Bedienperson mit eingeschränkten Zugriffsrechten, beispielsweise eine Bedienperson der Nachtschicht, nach längerer Stillstandzeit der Formgebungsmaschine (z.B. 45 Minuten) die Produktion ohne Probleme wieder anfahren. Ohne Vorwärmen könnte die Produktion erst wieder angefahren werden, wenn ein erfahrener Einrichter der Formgebungsmaschine anwesend ist, beispielsweise am nächsten Morgen im Anschluss an die Nachtschicht.

Wenn mehrere Heizstrahler betrieben und mehrere Regelzonen überwacht werden, kann vorzugsweise überprüft werden, ob der einer Regelzone $R_n$ zugeordnete Temperatursensor $TS_n$ von Strahlung von einem Halbzeug oder von Strahlung von einem Heizstrahler einer anderen Regelzone $R_n$' beaufschlagt wird. Damit kann ermittelt werden, ob ein Halbzeug in dem Gehäuse vorhanden ist oder nicht. Bei Nichtvorhandensein von Halbzeug in dem Gehäuse, kann das Vorwärmen der Heizvorrichtung beschleunigt werden und die Heizvorrichtung möglichst nah an die oder sogar auf die gewünschte Ofenbetriebstemperatur $T_{Betrieb}$ gebracht werden. In diesem Fall können nämlich die Heizstrahler mit einer höheren Einschaltdauer betrieben werden als wenn ein Halbzeug vorhanden wäre. Falls jedoch ein Halbzeug in dem Gehäuse vorhanden ist, kommt es bei einer oder mehreren Regelzonen nicht mehr dazu, dass der einer Regelzone $R_n$ zugeordnete Temperatursensor $TS_n$ von Strahlung von einem Heizstrahler einer anderen Regelzone $R_n$' beaufschlagt wird, sondern die Temperatur des Halbzeugs misst. In einem solchen Fall wird für alle Regelzonen Rn eine Temperaturbegrenzung vorgesehen, um ein "Überhitzen" des Halbzeugs zu vermeiden. Im Gegensatz zu oben können in diesem Fall die Heizstrahler nur mit einer reduzierten Einschaltdauer betrieben werden. Anders ausgedrückt bedeutet dies folgendes. Wenn mehrere Heizstrahler betrieben und mehrere Regelzonen überwacht werden, kann überprüft werden, ob der einer Regelzone $R_n$ zugeordnete Temperatursensor $TS_n$ von Strahlung von einem Halbzeug oder von Strahlung von einem Heizstrahler einer anderen Regelzone $R_n$' beaufschlagt wird. Bei Nichtvorhandensein von Halbzeug für den oder die Temperatursensoren TSn bzw. Pyrometer kann ein höherer Maximalwert an Temperatur vorgegeben werden als bei Vorhandensein von Halbzeug. Beispielsweise kann bei Nichtvorhandensein von Halbzeug an dem oder den Temperatursensoren bzw. Pyrometern eine Maximaltemperatur von 450°C vorgegeben werden, wohingegen bei Vorhandensein von Halbzeug eine Maximaltemperatur von bspw. 180°C vorgegeben werden kann.

Es kann vorteilhaft sein, wenn darüber hinaus die Aufheizrate von Halbzeug überwacht und mit vorgebbaren Werten verglichen wird. Damit lassen sich zusätzlich weitere Aspekte in die Erfindung mit einbeziehen. Hierzu wird mittels eines Temperatursensors $TS_n$ einer Regelzone $R_n$ die Aufheizrate von dieser Regelzone $R_n$ zugeordnetem Halbzeug überwacht und mit einer vorgegebenen Aufheizrate verglichen wird, wobei ein Differenzwert $\Delta_{Aufheiz}$ gebildet wird, indem die aktuelle Aufheizrate von der vorgegebenen Aufheizrate abgezogen wird ($Aufheizrate_{aktuell}$ - $Aufheizrate_{soll}$). Je nach Differenzwert $\Delta_{Aufheiz}$ können nun folgende Fälle vorkommen:

a) In dem Fall, dass der Differenzwert $\Delta_{Aufheiz}$ negativ und betragsmäßig größer ist als ein erster vorgegebener Maximal-Differenzwert $\Delta 1_{Aufheiz(max)}$, kann das Vorliegen eines Defekts an dem Temperatursensor $TS_n$ angezeigt werden. Hierbei wird davon ausgegangen, dass der Temperatursensor TSn, insbesondere in der Ausführung als Pyrometer, den Dämpfen ausgesetzt ist, die beim Erhitzen des Halbzeugs entstehen. Diese Dämpfe können zu einer Verschmutzung des Temperatursensors führen, wobei bei einem Pyrometer meist dessen Linse verschmutzt wird. Ab Erreichen des vorgegebenen ersten Maximal-Differenzwerts $\Delta 1_{Aufheiz(max)}$ kann vom Vorliegen einer verschmutzten Linse eines Pyrometers ausgegangen und ein entsprechender Defekt angezeigt werden. Es kann dann eine Reinigung der Linse des Pyrometers erforderlich sein und durchgeführt werden. Insbesondere bei Inbetriebnahme einer neuen Heizvorrichtung mit einem entsprechend neuen Pyrometer liegt zunächst eine saubere Linse vor und es kann eine entsprechende Referenz-Aufheizrate ermittelt und in einer Steuerungseinrichtung gespeichert werden. Diese bildet die oben genannte vorgegebene Aufheizrate, mit der die aktuelle Aufheizrate verglichen wird. Wird später während des Produktionsbetriebs eine zu große Abweichung der aktuellen Aufheizrate von der vorgegebenen Aufheizrate bzw. der Referenzaufheizrate festgestellt, dann kann eine Fehlermeldung ausgegeben werden. Mit anderen Worten ausgedrückt bedeutet dies, dass dann das Vorliegen eines Defekts an dem Temperatursensor $TS_n$, insbesondere an dem Pyrometer, angezeigt werden kann.

b) In dem Fall, dass der Differenzwert $\Delta_{Aufheiz}$ negativ und betragsmäßig größer ist als ein zweiter vorgegebener

Maximal-Differenzwert $\Delta2_{Aufheiz(max)}$, kann das Vorliegen eines Defekts an dem oder den der Regelzone $R_n$ zuge-ordneten Heizstrahler angezeigt werden.

c) In dem Fall, dass der Differenzwert $\Delta_{Aufheiz}$ positiv ist und betragsmäßig größer ist als ein dritter vorgegebener Maximal-Differenzwert $\Delta3_{Aufheiz(max)}$, kann das Vorliegen einer fehlerhaften Positionierung des Halbzeugs und/oder des Temperatursensors $TS_n$ angezeigt wird. Es liegt also eine größere Aufheizrate vor als die Referenz-Aufheizrate. Dies kann verschiedene Ursachen haben. Beispielsweise könnte der Abstand zwischen dem Heizstrahler und dem Halbzeug durch eine fehlerhafte Positionierung verringert worden sein. Ebenso ist es denkbar, dass das Halbzeug in seiner Längsrichtung gesehen nicht richtig positioniert ist und infolgedessen das Pyrometer zumindest auch den gegenüberliegenden Heizstrahler oder das Gehäuse "sieht" und dessen Strahlung erfasst. Es ist aber auch möglich, dass das Pyrometer nicht mehr korrekt positioniert ist. Dadurch "sieht" das Pyrometer nur noch teilweise das Halbzeug und teilweise den gegenüberliegenden Heizstrahler oder die Ofenwand.

Beim Einsatz einer Thermokamera und von Pyrometern als Messmittel, kann an jeder Stelle wo ein Pyrometer die Oberfläche des Halbzeugs misst auch eine Messstelle auf dem Thermobild definiert werden. Somit kann die Messung des Pyrometers mit der Messung im Thermobild verglichen werden. Daraus kann auf eine Verschmutzung der Pyrometer geschlossen werden.

Gemäß einer bevorzugten Ausführungsform der Erfindung kann die Aufheizrate kontinuierlich wie folgt überwacht werden um ein Verschmutzung der Linse zu detektieren. In der Aufheizrate entsteht im Bereich der Schmelztemperatur eine signifikante Änderung der Aufheizrate und ab der Schmelztemperatur im Anschluss meist ein leichte Erhöhung der Aufheizrate. Auf Grund der Veränderung $d\Delta/dt$ kann die Temperatur an diesem Punkt erfasst und mit der im Datenblatt angegebenen Schmelztemperatur des Kunststoffes vom Einleger verglichen werden. Wenn dabei eine Abweichung festzustellen ist, so kann ein Rückschluss auf eine Verschmutzung der Linse gezogen werden.

Vorzugsweise kann die Aufheizrate kontinuierlich überwacht werden. Dies bedeutet, dass die zeitliche Verän-derung $d\Delta/dt$ des Differenzwert $\Delta_{Aufheiz}$ der Aufheizrate überwacht werden kann und daraus Erkenntnisse gewonnen werden können. Hierbei werden sukzessiv Halbzeuge in das Gehäuse eingebracht, an einer vorgebbaren Position angeordnet und erhitzt, wobei diese Halbzeuge jeweils einer oder mehreren Regelzonen $R_n$ zugeordnet sind und wobei mittels eines Temperatursensors $TS_n$ einer Regelzone $R_n$ die jeweilige Aufheizrate eines Halbzeugs überwacht wird. Je nachdem wie sich der Differenzwert $\Delta_{Aufheiz}$ im Laufe der Zeit verändert, ergeben sich daraus unterschiedliche Erkenntnisse. Während im Fall der Verschmutzung einer Pyrometerlinse nur eine langsame Veränderung vorliegt, erfolgt im Falle eines defekten Heizstrahlers die Veränderung innerhalb kürzester Zeit, nahezu schlagartig.

In einer besonders bevorzugten Ausführungsform des erfindungsgemäßen Verfahrens kann vorgesehen werden, dass für eine vorgebbare Zeitdauer zunächst eine Luftströmung in Richtung der freien Konvektion vorgesehen wird und dass kurz vor Erreichen der Schmelztemperatur des Halbzeugs die Richtung der Luftströmung umgekehrt und eine der thermischen Konvektion entgegenwirkende Luftströmung erzeugt wird. Dadurch, dass die Luftströmung zunächst gleichgerichtet ist wie die freie bzw. thermische Konvektion in der Heizvorrichtung, wird eine höhere Geschwindigkeit der an dem Halbzeug vorbeiströmenden Luft erreicht. Je größer die Geschwindigkeit der an dem Halbzeug vorbeiströmenden warmen Luft ist, umso mehr Wärme kann auf das Halbzeug übertragen werden. Kurz vor Erreichen einer vorgebbaren Temperatur, insbesondere der Schmelztemperatur des Halbzeugs, kann die Richtung des Luftstroms umgekehrt und eine der thermischen Konvektion entgegenwirkende Luftströmung erzeugt werden, um die thermische Konvektion in dem Gehäuse so gering wie möglich zu halten und eine Homogenisierung der Temperaturverteilung in dem Halbzeug zu erzielen. Somit wird zu Beginn des Aufheizens des Halbzeugs eine kurze Aufheizzeit und gleichzeitig zum Ende des Aufheizvorgangs eine homogene Temperaturverteilung in dem Halbzeug erreicht. Das Erreichen der Schmelztemperatur kann anhand der Veränderung der Aufheizrate erkannt bzw. ermittelt werden. Hierzu ist eine entsprechende Auswertung der Aufheizrate vorgesehen.

Eine Vorrichtung für das Verfahren zeichnet sich dadurch aus, dass eine Heizvorrichtung für das Halbzeug und eine Formgebungsmaschine zum Umformen des Halbzeugs und gegebenenfalls Anbringen von Kunststoff-Material an das umgeformte Halbzeug vorgesehen ist. Die Heizvorrichtung weist ein geschlossenes Gehäuse mit wenigstens einer Tür auf. Alternativ dazu oder gegebenenfalls auch zusätzlich weist das Gehäuse wenigstens eine Öffnung auf, welche mit vom Gehäuse losgelösten Mitteln verschließbar ist. Zum Verschließen einer solchen Öffnung in dem Gehäuse kann beispielsweise eine Platte vorgesehen sein, welche mit einem Handhabungsgerät auf die Öffnung aufgesetzt und von dort abgehoben werden kann. Vorzugsweise kann hierbei dasjenige Handhabungsgerät vorgesehen werden, mit welchem das Halbzeug in das Gehäuse eingebracht wird. Alternativ dazu oder gegebenenfalls auch zusätzlich weist die Heizvorrichtung ein teilbares Gehäuse auf, bei welchem die Gehäusebestandteile zur Bildung einer Öffnung voneinander weg und zur Bildung eines geschlossenen Gehäuses aufeinander zu bewegbar sind. Im Inneren des Gehäuses sind ein oder mehrere Heizstrahler vorgesehen, insbesondere Infrarot-Heizstrahler. Ferner sind Mittel vorgesehen, mit denen im Innern des Gehäuses eine der thermischen Konvektion entgegenwirkende Luftströmung erzeugbar ist.

Die Vorrichtung eignet sich zur Herstellung von Formteilen aus einem Halbzeug und gegebenenfalls daran angebrachtem Kunststoff-Material. Sie ist insbesondere zur Durchführung des Verfahrens nach einem der Ansprüche 1 bis 17geeignet.

Im Sinne der vorliegenden Erfindung ist unter einer Tür jedwede Art von mechanisch betätigbarem Verschlusselement zu verstehen, mit welchem in dem Gehäuse eine Öffnung erzeugt und wieder beseitigt werden kann. Durch Betätigen der Tür bzw. des Verschlusselements in Öffnungsrichtung kann also in dem Gehäuse eine Öffnung erzeugt oder bereitgestellt werden, durch welche Halbzeug in das Innere des Gehäuses eingebracht und dort positioniert werden kann. Durch Betätigen der Tür bzw. des Verschlusselements in Schließrichtung kann die Öffnung wieder verschlossen und somit ein geschlossenes Gehäuses gebildet werden. Eine solche Tür kann als Drehtür oder als Schiebetür ausgebildet sein.

Es ist aber auch möglich, ein teilbares Gehäuse vorzusehen, wobei die Gehäusebestandteile voneinander weg und aufeinander zu bewegbar sind. Auf diese Weise kann ebenfalls eine Öffnung erzeugt und bereitgestellt werden, durch welche das Halbzeug in das Innere des Gehäuses eingebracht werden kann. Im einfachsten Fall kann das Gehäuse aus zwei Bestandteilen, insbesondere aus zwei Hälften, bestehen, welche im zusammengefahrenen Zustand ein geschlossenes Gehäuse bilden. Im auseinander gefahrenen Zustand wird eine Öffnung im Sinne der vorliegenden Erfindung bereitgestellt.

Gemäß einer besonders einfachen Ausführungsform weist das Gehäuse lediglich eine Öffnung ausreichender Größe und geeigneter Gestalt auf, durch die das Halbzeug in das Gehäuse eingebracht werden kann. Diese Öffnung kann mit einer Platte verschlossen werden, die mittels eines Handhabungsgerätes auf diese Öffnung aufgesetzt und von dort wieder abgehoben werden kann. Vorzugsweise kann hierbei dasjenige Handhabungsgerät vorgesehen werden, mit welchem das Halbzeug in das Gehäuse eingebracht wird.

Gemäß einer bevorzugten Ausführungsform können ein oder mehrere Luftkanäle mit jeweils einem oder mehreren Ventilatoren vorgesehen sein, wobei die Drehzahl von einem oder mehreren der Ventilatoren vorzugsweise regelbar ist, insbesondere mittels geeigneter Umrichter. Der oder die Luftkanäle können einerseits an eine oder mehrere Öffnungen im Gehäuseboden und andererseits an eine oder mehrere Öffnungen im Gehäusedeckel angeschlossen sein. Mittels des oder der Ventilatoren kann somit in dem Gehäuse eine Luftströmung erzeugt werden, bei der im Bereich des Gehäusebodens Luft aus dem Inneren des Gehäuses abgesaugt, die abgesaugte Luft über den oder die Luftkanäle auf die Oberseite des Gehäuses geleitet und im oberen Bereich des Gehäuses in das Innere des Gehäuses zurückgeführt wird. Je nach Einstellung der Ventilatoren kann aber auch eine Luftströmung mit einer umgekehrten Richtung erzeugt werden. Mit der so gestalteten Vorrichtung kann ein Umluftbetrieb erzeugt werden, wobei die Richtung der Luftströmung frei einstellbar ist. Damit ist eine Luftströmung erzeugbar, die der thermischen Konvektion entgegenwirkt, insbesondere zur Durchführung des Verfahrens gemäß Anspruch 1. Im Bedarfsfall kann aber auch eine Luftströmung mit entgegengesetzter Richtung erzeugt werden.

Zur Erhöhung der Flexibilität der Heizvorrichtung können an einem oder mehreren der Luftkanäle eine oder mehrere verschließbare und öffenbare Luftkanal-Klappen vorgesehen sein, über die im Bedarfsfall die Zufuhr von Frischluft oder einem sonstigen Gas in das Innere des Gehäuses vorgesehen werden kann.

Gemäß einer weiteren Ausführungsform können in dem Gehäuse, insbesondere im unteren Bereich des Gehäuses, eine oder mehrere Düsen vorgesehen werden, die an eine geeignete Druckluftquelle angeschlossen sind. Damit kann Druckluft in das Innere des Gehäuses eingebracht werden, um eine Luftströmung zu erzeugen, die der thermischen Konvektion entgegengerichtet ist. Vorzugsweise können Regelungsmittel vorgesehen sein, beispielsweise eine Ventileinrichtung mit einer geeigneten Ventil-Steuerungseinrichtung, um den Druck und die Menge der in das Gehäuse einströmenden Luft regeln zu können. Je nachdem, wie sich die Temperaturdifferenz ($T_o$ - $T_u$) verändert, kann somit die Menge bzw. der Druck an einer oder mehreren der Druckluftdüsen automatisch angepasst werden.

Ebenso können an dem Gehäuse eine oder mehrere Gehäuse-Klappen und/oder eine oder mehrere Türen vorgesehen sein, über welche im geöffneten Zustand Frischluft in das Innere des Gehäuses einströmen und Warmluft aus dem Inneren des Gehäuses abströmen kann. Als Türen für die Frischluftzufuhr können die ohnehin vorhandenen und für das Einbringen von Halbzeug vorgesehenen Türen vorgesehen werden.

Vorzugsweise sind auf der Oberseite des Gehäuses im Gehäusedeckel eine oder mehrere Gehäuse-Klappen vorgesehen, welche vorrangig dazu dienen, dass Warmluft aus dem Inneren des Gehäuses abströmen kann. Vorzugsweise sind an der Unterseite des Gehäuse in dem Gehäuseboden und/oder im unteren Bereich der Seitenwände des Gehäuses eine oder mehrere Gehäuse-Klappen vorgesehen, welche vorrangig dazu dienen, dass Frischluft in das Innere des Gehäuses einströmen kann. Die Türen sind vorrangig dazu da, dass bei geöffneter Tür Halbzeug in das Gehäuse eingebracht und aus diesem herausgenommen werden kann. Solange die Tür geöffnet ist, kann aber auch Frischluft in das Gehäuse einströmen und Warmluft aus dem Gehäuse abströmen.

Die Anordnung der Türen sowie die konstruktive Ausgestaltung, die Betätigungsart und die Betätigungsrichtung der Türen oder von Türelementen richtet sich nach den jeweiligen konstruktiven Gegebenheiten des Gehäuses 1 und der Gestalt des zu erhitzenden Halbzeugs. Dies gilt sinngemäß auch für die Gehäuse-Klappen und den oder die Luftkanäle.

In dem Gehäuse der Heizvorrichtung können mehrere, unabhängig voneinander betreibbare Heizstrahler und

mehrere Regelzonen $R_n$ vorgesehen sein. Dabei ist jeder Regelzone $R_n$ genau ein Temperatursensor $TS_n$, insbesondere ein Pyrometer, zugeordnet. Die Anzahl an Heizstrahlern, die einer Regelzone zugeordnet ist, kann variieren und richtet sich insbesondere nach der Größe des Halbzeugs, welches mit Heizstrahlung zu beaufschlagen ist. Jeder Regelzone $R_n$ können also ein oder mehrere Heizstrahler zugeordnet sein. Hier sind vielfältige Gestaltungen denkbar, von denen einige bei der der Beschreibung der Ausführungsbeispiele und unter Bezugnahme auf geeignete Figuren näher erläutert werden.

Vorzugsweise können mehrere Paare von Heizstrahlern gebildet werden bzw. vorgesehen sein, wobei jedes dieser Paare von zwei voneinander beabstandeten und einander zugewandten Heizstrahlern gebildet ist. Jedes Paar von Heizstrahlern ist somit zur Beaufschlagung von dazwischen befindlichem Halbzeug mit Heizstrahlung ausgebildet.

Gemäß einer ersten Ausführungsform einer Vorrichtung mit Paaren von Heizstrahlern kann vorgesehen sein, dass zwischen benachbarten Paaren von Heizstrahlern jeweils eine Trennwand in dem Gehäuse eingebaut ist, so dass mehrere Kammern in dem Gehäuse vorliegen und in jeder Kammer ein Paar von Heizstrahlern vorliegt. Ein Paar von Heizstrahlern ist für das Erhitzen von exakt einem Stück Halbzeug vorgesehen. Die Trennwand kann mehr oder weniger stark ausgeprägt auch thermisch isolierend ausgebildet sein. Diese Ausführungsform ist insbesondere dann von Vorteil, wenn in der Formgebungsmaschine mehrere Formgebungskavitäten vorhanden sind, so dass mehrere Halbzeuge in einem Arbeitsvorgang gleichzeitig umgeformt und gegebenenfalls mit einem Kunststoffmaterial versehen werden können, insbesondere in dem Fall, dass die Formgebungsmaschine als Spritzgießmaschine mit einem Mehrkavitäten-Spritzgießwerkzeug ausgebildet ist. Diese erste Ausführungsform kann daher auch als Mehrkavitäten-Vorrichtung bezeichnet werden.

Gemäß einer zweiten Ausführungsform einer Vorrichtung mit Paaren von Heizstrahlern kann vorgesehen sein, dass ein oder mehrere Paare von Heizstrahlern zur Beaufschlagung von einem einzigen Stück Halbzeug vorgesehen sind. Es geht also darum, dass das Halbzeug eine Größe aufweist, die den Betrieb von mehreren Paaren an Heizstrahlern erfordert. Im Normalfall liegen dann auch mehrere Regelzonen vor, so dass diese Ausführungsform auch als Vorrichtung mit mehreren Regelzonen bezeichnet werden kann. Insbesondere liegen hierbei mehrere Regelzonen für ein einziges Stück Halbzeug vor.

Grundsätzlich können auch Heizstrahler verwendet, die aus mehreren Heizstrahler-Segmenten zusammengesetzt sind. Dabei kann es vorteilhaft sein, wenn die einzelnen Heizstrahler-Segmente unabhängig voneinander betreib- und regelbar sind.

Nachfolgend soll die Erfindung anhand von Ausführungsbeispielen und unter Bezug auf die Figuren näher beschrieben werden. Es zeigen:

Figur 1          erste Ausführungsform einer Heizvorrichtung;
Figur 2          zweite Ausführungsform einer Heizvorrichtung;
Figur 3          dritte Ausführungsform einer Heizvorrichtung;
Figur 4a - 4d    verschiedene Varianten der Zuordnung von Heizstrahlern zu Regelzonen;
Figur 5          Heizstrahler mit Heizstrahler-Segmenten;
Figur 6          Produktionsanlage für die Herstellung von umspritzten Organoblechen;
Figur 7          Verlauf von Temperatur, ED-Stellsignal und ED-Pulsdauer für zwei synchron aufzuheizende Regelzonen;
Figur 8          Heizvorrichtung mit teilbarem Gehäuse;
Figur 9          zeitlicher Verlauf der Temperatur vom Halbzeug beim Aufheizen.

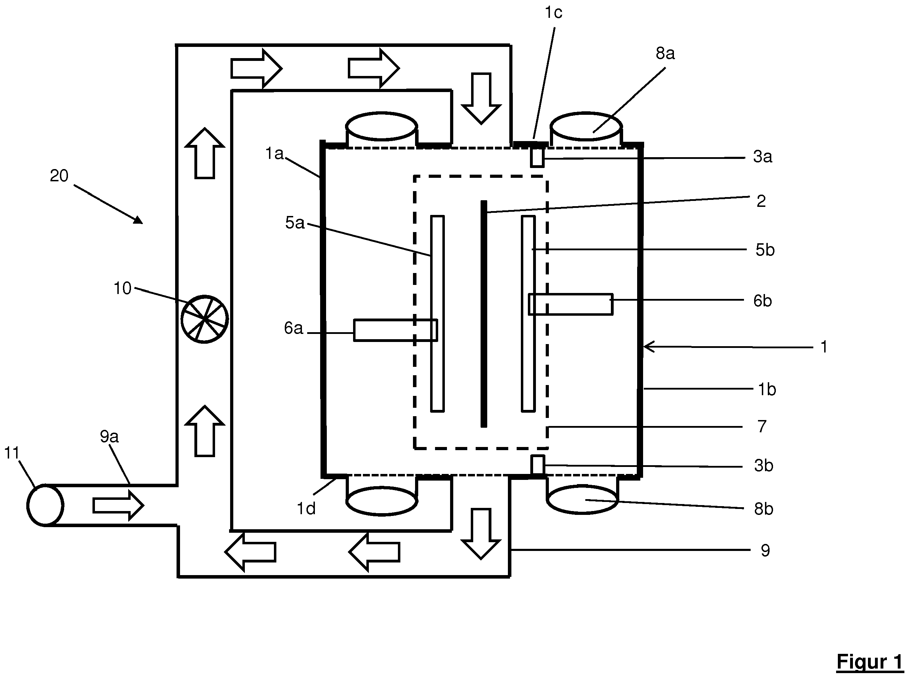

Die Figur 1 zeigt sehr schematisch eine Heizvorrichtung 20 mit einem Gehäuse 1 mit Seitenwänden 1a und 1b, einem Gehäusedeckel 1c und einem Gehäuseboden 1d. An der Vorderseite des Gehäuses 1 ist mit einer gestrichelten Linie das Vorhandensein einer Tür 7 angedeutet. Bei geöffneter Tür 7 kann ein zu erhitzendes Halbzeug 2 in das Innere des Gehäuses 1 eingebracht und wieder herausgenommen werden. Im vorliegenden Ausführungsbeispiel ist eine vertikale Anordnung des Halbzeugs 2 vorgesehen. Im Innern des Gehäuses 1 ist ein Paar von Heizstrahlern vorgesehen, wobei dieses Paar von zwei voneinander beabstandeten und einander zugewandten Heizstrahlern 5a und 5b gebildet ist. Jedem Heizstrahler ist ein Pyrometer 6a und 6b zugeordnet, mit welchem die jeweilige Oberflächentemperatur des Halbzeugs gemessen werden kann. Zu jedem der Pyrometer 6a und 6b gibt es eine Regelzone, worauf im Zusammenhang mit den nachfolgenden Figuren noch näher eingegangen werden soll. In dem Gehäuse 1 sind ein erster Ofen-Temperatursensor 3a an dem Gehäusedeckel 1c auf dessen Innenseite und ein zweiter Ofen-Temperatursensor 3b an dem Gehäuseboden 1d auf dessen Innenseite vorgesehen. Diese Ofen-Temperatursensoren können beispielsweise Thermoelemente sein. Mit diesen Temperatursensoren können eine obere Ofentemperatur To (Thermoelement 3a) und eine untere Ofentemperatur Tu (Thermoelement 3b) gemessen werden. An dem Gehäuse 1 sind ferner Gehäuseklappen 8a oben und 8b unten vorgesehen, die im Bedarfsfalle geöffnet und geschlossen werden können. Ferner ist ein Luftkanal 9 vorgesehen, der einerseits an eine Öffnung im Gehäuseboden 1d und andererseits an eine Öffnung im Gehäusedeckel 1c angeschlossen ist. In dem Luftkanal 9 ist ein Ventilator mit variabler Drehzahl eingebaut. In der Figur 1 wird der Ventilator 10 in der Weise betrieben, dass im Bereich des Gehäusebodens 1d Luft aus dem Inneren des Gehäuses abgesaugt wird, die abgesaugte Luft über den Luftkanal 9 auf die Oberseite des Gehäuses 1 geleitet und die Luft im oberen Bereich des Gehäuses in das Innere des Gehäuses 1 zurückgeführt wird. Diese Luftströmung ist durch die in den Luftkanal 9 eingezeichneten Pfeile dargestellt. An dem Luftkanal 9 ist eine Zweigleitung 9a angeschlossen, an deren Ende eine Luftkanal-Klappe 11 angebracht ist, über die bei geöffneter Luftkanal-Klappe 11 eine Frischluftzufuhr erfolgen kann, was mit dem Pfeil in der Zweigleitung 9a veranschaulicht werden soll.

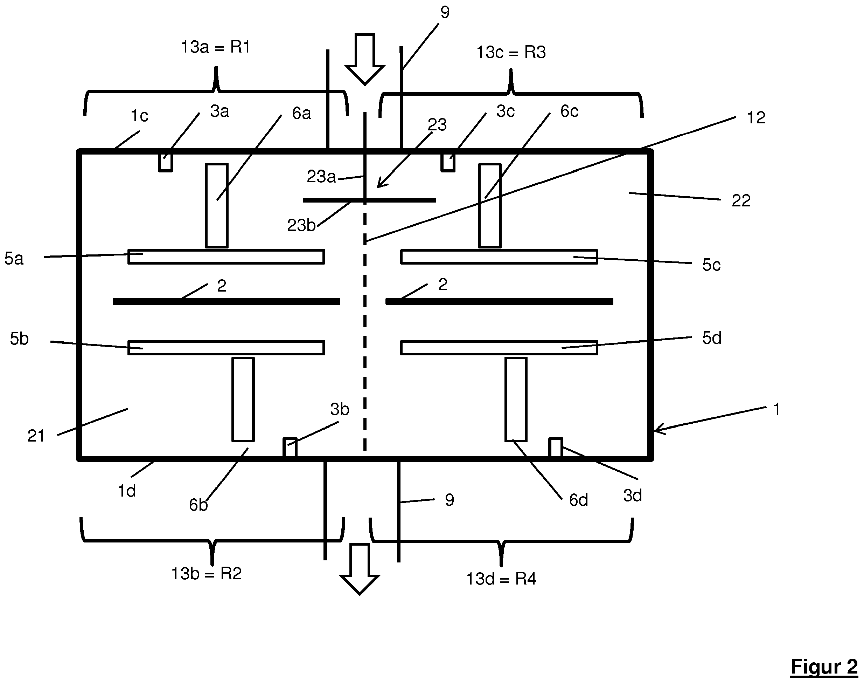

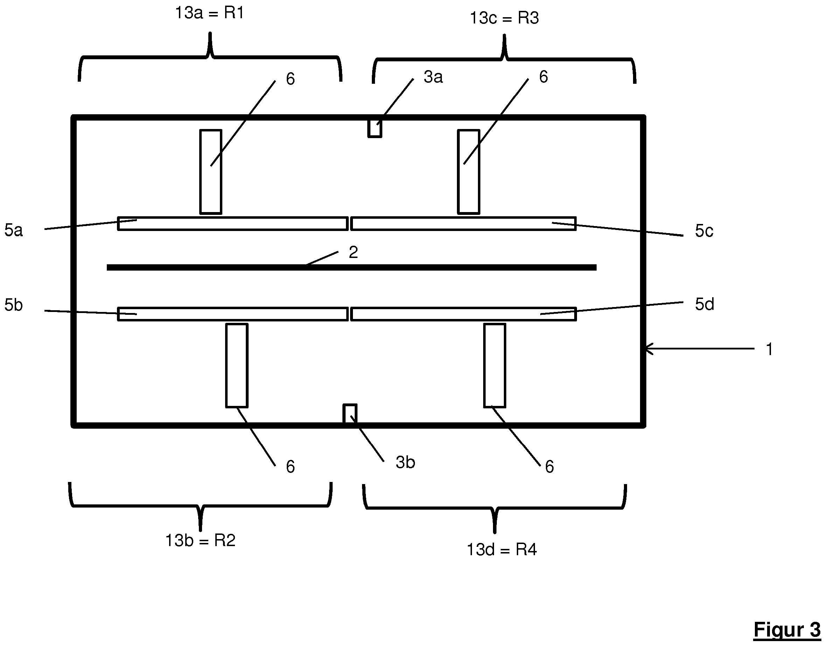

In den nachfolgenden Figuren 2 und 3 ist das Gehäuse 1 ohne Tür 7 und ohne die Gehäuseklappen 8a, 8b dargestellt.

Anhand der Figur 2 soll der sogenannten Mehrkavitäten-Betrieb bzw. die Mehrkavitäten-Vorrichtung näher beschrieben werden. Im Unterschied zur Figur 1 ist vorliegend eine horizontale Anordnung des Halbzeugs in der Heizvorrichtung vorgesehen. Grundsätzlich könnte aber auch hier eine vertikale Anordnung vorgesehen werden. Im Inneren des Gehäuses 1 ist eine Trennwand 12 vorhanden, welche das Innere des Gehäuses in zwei Kammern 21 und 22 unterteilt. Die Trennwand 12 kann mehr oder weniger stark thermisch isolierend ausgebildet sein. Grundsätzlich ist es aber auch möglich, auf die Trennwand 12 zu verzichten. Die thermische Trennung kann sinnvoll sein, wenn im Ofen verschiedene Temperatur Bereiche herrschen. Außerdem kann eine thermische Trennung zur gezielten Führung der Luftströmung von Vorteil sein. Der Luftkanal 9 ist lediglich teilweise dargestellt, nämlich die an den Gehäusedeckel 1c und an den Gehäuseboden 1d angeschlossenen Abschnitte. Um den ankommenden Luftstrom auf beide Kammern 21 und 22 möglichst gleichmäßig zu verteilen, ist ein in geeigneter Weise ausgebildetes Leitblech 23 im oberen Bereich des Gehäuses 1 angeordnet. Das Leitblech 23 verfügt im Wesentlichen über ein vertikales Leitblechstück 23a und ein horizontales Leitblechstück 23b, die jeweils entsprechend den Anforderungen an die Verteilung des Luftstroms ausgestaltet sind. In jeder Kammer ist ein Paar von Heizstrahlern angeordnet, zwischen denen jeweils ein Stück zu erhitzendes Halbzeug 2 mittig positioniert ist. Die Kammer 21 ist somit wie folgt ausgestattet: Heizstrahler 5a und 5b, Pyrometer 6a und 6b, Ofen-Temperatursensoren 3a (oben) und 3b (unten), Regelzonen 13a und 13b. Die Kammer 22 ist wie folgt ausgestattet: Heizstrahler 5c und 5d, Pyrometer 6c und 6d, Ofen-Temperatursensoren 3c (oben) und 3d (unten), Regelzonen 13c und 13d. Wie bereits oben bei der Darstellung der Erfindung ausgeführt gilt folgendes. Eine Regelzone ist dadurch definiert, dass für diese Regelzone immer genau ein einziges Pyrometer vorhanden ist, um die Strahlung aus demjenigen Bereich des Gehäuses zu erfassen, der sich vor der Linse des Pyrometers befindet. Im vorliegenden Ausführungsbeispiel gibt es also vier Regelzonen $R_1$, $R_2$, $R_3$ und $R_4$. Ferner ist gemäß diesem Ausführungsbeispiel vorgesehen, dass jeder dieser Regelzonen exakt ein Heizstrahler zugeordnet ist. Ferner kann auch eine andere Art und Weise für die Zuleitung des Luftstroms in die Kammern 21 und 22 vorgesehen werden. Beispielsweise könnte an jede Kammer ein eigener Abschnitt des Luftkanals 9a angeschlossen werden, so dass links und rechts von der Trennwand 12 zwei Luftkanal-Abschnitte 9 in den Gehäusedeckel 1c und zwei Luftkanal-Abschnitte 9 in den Gehäuseboden 1d münden. Um die Kammern 21 und 22 unterschiedlich mit Luft versorgen zu können, können in den Luftkanal-Abschnitten, die an den Gehäusedeckel 1c im Bereich der Kammern 21 und 22 angeschlossen sind, getrennt regelbare Ventilatoren vorgesehen werden. Nicht dargestellt sind Türen, über die die Halbzeuge 2 in die Kammern 21 und 22 eingebracht werden können. Vorzugsweise kann an dem Gehäuse 1 für jede der Kammern 21, 22 eine eigene Tür vorgesehen werden.

Die Figur 3 zeigt eine zweite Ausführungsform einer Vorrichtung, wobei der Einfachheit halber nur das Gehäuse 1 der Heizvorrichtung dargestellt ist. Vorliegend sind zwei Paare von Heizstrahlern zur Beaufschlagung von einem einzigen Stück Halbzeug 2 vorgesehen sind, nämlich im linken Bereich des Gehäuses 1 ein erstes Paar an Heizstrahlern 5a und 5b und im rechten Bereich des Gehäuses 1 ein zweites Paar an Heizstrahlern 5c und 5d. Das Halbzeug 2 hat eine Größe, die den Betrieb von zwei Paaren an Heizstrahlern erfordert. Hierbei liegen mehrere Regelzonen R1, R2, R3 und R4 für ein einziges Stück Halbzeug 2 vor. Diese Ausführungsform kann daher auch als Vorrichtung mit mehreren aktiven Regelzonen bezeichnet werden. Der Einfachheit ist vorliegend der Luftkanal 9 (siehe Figur 1 und Figur 2) komplett weggelassen worden. Es sind vielfältige Möglichkeiten denkbar und für den Fachmann umsetzbar, wie der Luftstrom in das Gehäuse 1 zugeführt und aus diesem herausgeführt wird. Ferner ist eine hier nicht eingezeichnete Tür in dem Gehäuse 1 vorhanden.

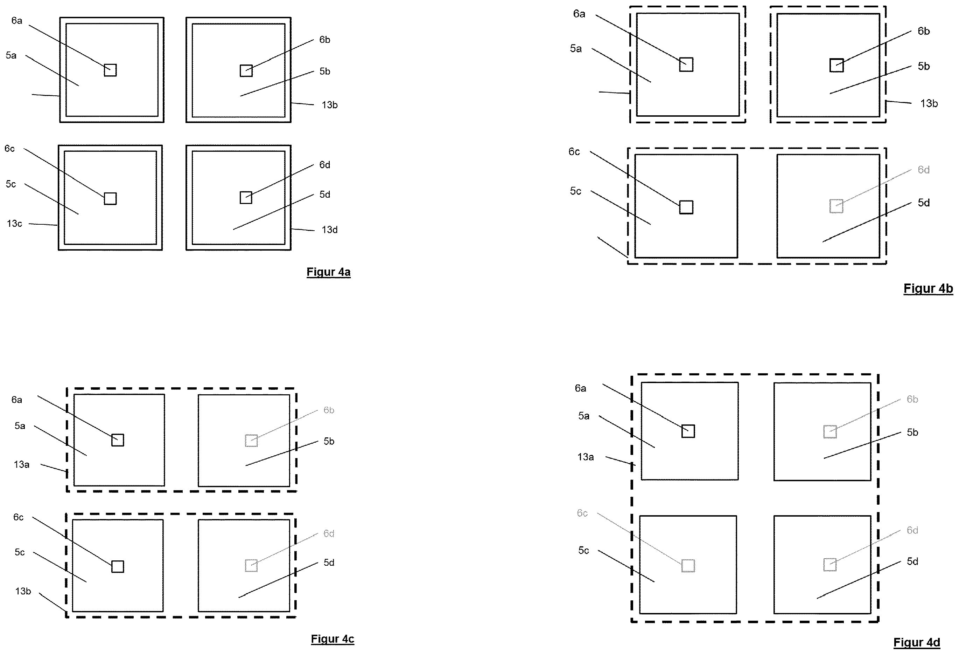

Anhand der Figuren 4a, 4b, 4c und 4d sollen nachfolgend verschiedene Varianten der Zuordnung von Heizstrahlern zu Regelzonen beschrieben werden. Dargestellt ist eine Draufsicht auf eine Gruppe von vier Heizstrahlern.

a) Die Figur 4a zeigt eine Ausführungsform mit vier Regelzonen 13a, 13b, 13c und 13d mit jeweils einem aktiven Pyrometer 6a, 6b, 6c und 6d. Zu jeder Regelzone ist ein separater Heizstrahler 5a, 5b, 5c und 5d vorhanden.

b) Die Figur 4b zeigt eine Ausführungsform mit drei gestrichelt umrandeten Regelzonen und vier Heizstrahlern, wobei die Regelzone 13c zwei Heizstrahler 5c und 5d umfasst und die Regelzonen 13a und 13b jeweils nur einen einzigen Heizstrahler 5a bzw. 5b. In der Regelzone 13c ist ein aktives Pyrometer 6c vorhanden. Ein zweites Pyrometer 6d ist entweder nicht vorhanden oder inaktiv geschaltet. Ein "inaktives" Pyrometer könnte auch lediglich im Messbetrieb benutzt werden. Beispielsweise könnte das "inaktive" Pyrometer zur Messung von Referenzwerten in Bezug auf die vom "aktiven" Pyrometer gemessenen Werte dienen.

c) Die Figur 4c zeigt eine Ausführungsform mit zwei gestrichelt umrandeten Regelzonen und vier Heizstrahlern, wobei die Regelzonen 13a und 13b jeweils zwei Heizstrahler umfassen. Der Regelzone 13a sind die Heizstrahler 5a und 5b zugeordnet und der Regelzone 13b sind die Heizstrahler 5c und 5d zugeordnet. In der Regelzone 13a ist ein aktives Pyrometer 6a vorhanden. Ein zweites Pyrometer 6b ist entweder nicht vorhanden oder inaktiv geschaltet. Die Regelzone 13b ist ebenfalls mit einem aktiven Pyrometer 6c ausgestattet und ein weiteres Pyrometer 6d ist entweder nicht vorhanden oder inaktiv geschaltet.

d) In der Figur 4d ist nur noch eine einzige Regelzone 13a vorhanden, der vier Heizstrahler 5a, 5b, 5c und 5d zugeordnet sind. Es ist lediglich ein einziges Pyrometer 6a vorhanden oder - falls noch weitere Pyrometer 6b, 6c und 6d vorhanden sind - ist lediglich ein einziges Pyrometer 6a aktiv geschaltet.

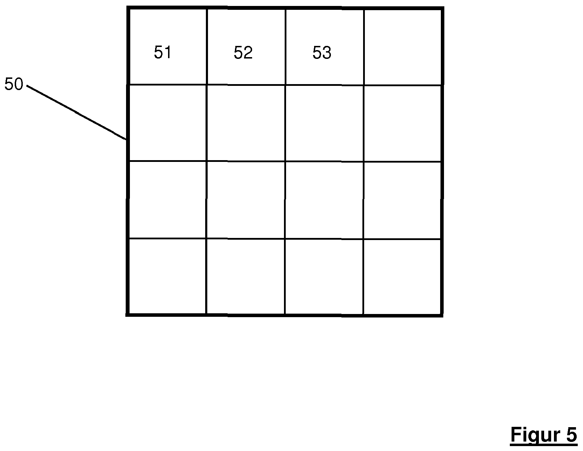

Die Figur 5 zeigt in Draufsicht eine Ausführungsform eines Heizstrahlers 50, der aus mehreren Heizstrahler-Segmenten 51, 52, 53, und so fort zusammengesetzt ist. Die Heizstrahler-Segmente können gleich groß sein, insbesondere in Bezug auf die strahlende Fläche, wie dies in der Figur 5 gezeigt ist. Grundsätzlich können aber auch verschieden große Heizstrahler-Segmente vorhanden sein, sofern insgesamt eine durchgehende strahlende Fläche gebildet werden kann.

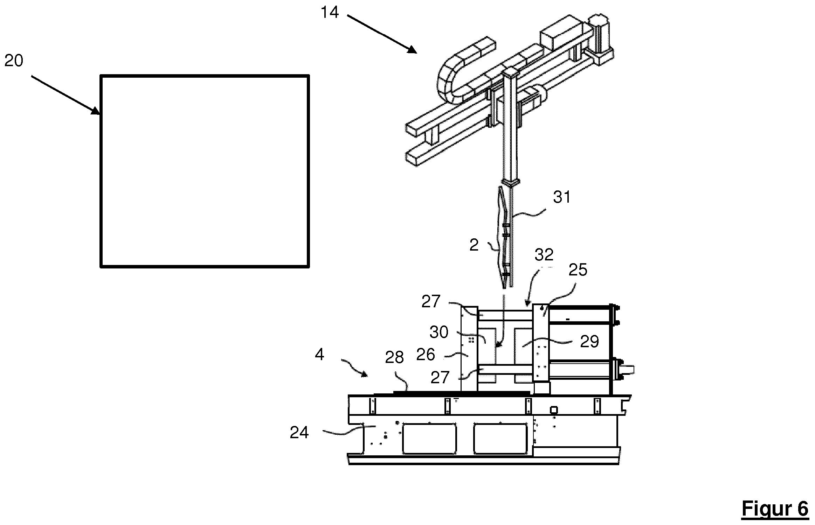

In der Figur 6 ist schematisch dargestellt, wie die Heizvorrichtung 20 mit einer Formgebungsmaschine zusammenwirkt.

In der Figur 6 ist eine beispielhafte Spritzgießmaschine 4 dargestellt. Zwischen der Heizvorrichtung 20 und der Spritzgießmaschine 4 ist eine Handhabungsgerät 14 vorgesehen, um Halbzeug 2 aus der Heizvorrichtung 20 einem Spritzgießwerkzeug zuzuführen. Die Spritzgießmaschine 4 weist ein Maschinenbett 24 auf. Auf dem Maschinenbett 24 ist eine feststehende Formaufspannplatte 25 befestigt und eine bewegliche Formaufspannplatte 26 linear verschiebbar gelagert. Zur ihrer linear verschiebbaren Lagerung ist die bewegliche Formaufspannplatte 26 entlang von vier Horizontalsäulen 27 verschiebbar gelagert. Die bewegliche Formaufspannplatte 26 kann beispielsweise durch nicht näher dargestellte hydraulische Antriebe entlang der Längserstreckung der vier Horizontalsäulen 27 bewegt werden. Die bewegliche Formaufspannplatte 26 ist durch Linearführungen 28 horizontal beweglich auf dem Maschinenbett 24 gelagert. An der feststehenden Formaufspannplatte 25 ist eine erste Spritzgießformhälfte 29 befestigt. An der beweglichen Formaufspannplatte 26 ist eine zweite Spritzgießformhälfte 30 befestigt. Die beiden Spritzgießformhälften 29 und 30 sind im vorliegenden Ausführungsbeispiel ausgebildet, ein Halbzeug 2 umformen und mit thermoplastischem Kunststoff umspritzen zu können. Das Halbzeug 2 kann beispielsweise ein plattenförmiges Halbzeug, insbesondere ein Organoblech sein.

Wie in der Figur 6 schematisch dargestellt wird eine Heizvorrichtung 20 bereitgestellt, welche dazu vorgesehen ist, ein darin eingelegtes Halbzeug zu erhitzen. Nachdem das Halbzeug seine Umformtemperatur erreicht hat, wird in einem nächsten Schritt das Halbzeug 2 mittels eines Handhabungsgerätes 14 aus der Heizvorrichtung 20 entnommen. Dazu kann das Handhabungsgerät 14 beispielsweise einen Nadelgreifer 31 aufweisen, welcher ausgebildet ist, das Halbzeug 2 zu halten. Mit dem Handhabungsgerät 14 kann das Halbzeug 2 außerdem in ein Formwerkzeug 32 der Spritzgießmaschine 4 zum Umformen und Umspritzen des Halbzeugs überführt werden. Das Formwerkzeug 32 wird im gezeigten Ausführungsbeispiel von den beiden Spritzgießformhälften 29 und 30 gebildet. Die Spritzeinheit der Spritzgießmaschine 4 ist der Einfachheit halber nicht dargestellt.

Nachfolgend soll die Funktionsweise der Vorrichtung näher erläutert werden bzw. es soll das erfindungsgemäße Verfahren unter Verwendung der Vorrichtung beschrieben werden.

Das Ziel des erfindungsgemäßen Verfahrens bzw. der Regelung/Steuerung ist es, die Ofenbetriebstemperatur während der Produktion und auch bei Maschinenstillständen möglichst konstant zu halten. Des Weiteren soll zusätzlich eine homogene Temperaturverteilung innerhalb des Gehäuses 1 der Heizvorrichtung 2 entstehen. Die Heizvorrichtung 2 soll nachfolgend einfach auch als Ofen bezeichnet werden. Vor Beginn des Herstellungsverfahrens oder vor der Wiederaufnahme des Herstellungsverfahrens nach einer Produktionsunterbrechung wird der Ofen vorgewärmt, wobei das Innere des Gehäuses 1 auf eine Vorwärmtemperatur $T_{vor}$ aufgeheizt wird, welche unterhalb einer vorgebbaren Ofenbetriebstemperatur $T_{Betrieb}$ liegt. Als Ofenbetriebstemperatur $T_{Betrieb}$ wird diejenige Temperatur To hergenommen, die am oberen Thermoelement 3a gemessen wird. Es wird vorzugsweise eine für den vollautomatischen Betrieb der Heizvorrichtung und/oder eine auf das Halbzeug abgestimmte Temperatur To als Ofenbetriebstemperatur $T_{Betrieb}$ zugrunde gelegt.

Im Gehäuse 1 wird die Temperatur über Temperatursensoren wie zum Beispiel Thermoelemente unten (3b) und oben (3a) gemessen. Falls mehrere Kammern vorhanden sind (siehe Figur 2), wird in jeder der Kammern ein solches Paar an Temperatursensoren vorgesehen. Steigt die Temperatur am oberen Thermoelement 3a über die vorgegebene Ofen-Betriebstemperatur, so werden Klappen 8a, 8b sowie in Heizpausen auch die Tür/Türen 7 für eine berechnete Zeitdauer geöffnet, um ein geregeltes Abkühlen auf die Ofen-Betriebstemperatur zu gewährleisten.

Dem Effekt der thermischen Konvektion (Ofen wird oben wärmer als unten durch Luftströmungen / freie bzw. thermische Konvektion) wird durch die technische Maßnahme "Luftgegenströmung" mittels eines geregelten Gegenluftstromes entgegengewirkt. Im Innern des Gehäuses 1 wird eine der thermischen Konvektion entgegenwirkende Luftströmung erzeugt (siehe Pfeile in der Figur 1). Diese Luftströmung ist im Innern des Gehäuses im Wesentlichen von oben nach unten gerichtet.

Mittels des Ventilators 10 wird die kühlere Luft im unteren Bereich des Ofens abgesaugt und über den Luftkanal 9 in den oberen Bereich des Ofens zurückgeführt. Dadurch entsteht ein Luftstrom entgegen der Konvektion. Der Ventilator 10 wird dabei drehzahlgeregelt über einen Umrichter betrieben. Wenn das Temperatur-Delta zwischen den Temperatursensoren unten (3b) und oben (3a) ansteigt, so wird die Drehzahl des Ventilators 10 automatisch angepasst (erhöht / vermindert).

Um mehrere Halbzeuge möglichst synchron aufzuheizen, wird wie folgt vorgegangen: Ein übergeordneter Regler beobachtet alle "aktiven" Regelzonen Rn im Gehäuse 1 und berechnet für jede Regelzone Rn ein aktuelles Temperatur-Delta wie folgt. In jeder Regelzone $R_n$ wird der aktuelle Temperatur-Istwert $T_n(t)$ der Temperatur von derjenigen Oberfläche des Halbzeugs gemessen werden, welche den Heizstrahlern zugewandt ist, die der Regelzone $R_n$ zugeordnet sind. Für diese Oberfläche wird ein Temperatur-Sollwert $T_n(soll)$ vorgegeben und die Differenz zwischen dem Temperatur-Sollwert $T_n(soll)$ und dem gemessenen aktuellen Temperatur-Istwert $T_n(t)$ für diese Oberfläche des Halbzeugs in der Regelzone $R_n$ wird gebildet. Somit wird für jede Regelzone $R_n$ ein aktueller Differenzwert $\Delta_n(t)$ (= aktuelles Temperatur-Delta in der Regelzone $R_n$) ermittelt. Ausgehend hiervon wird diejenige Regelzone ermittelt wird, für die der aktuelle Differenzwert $\Delta_n(t)$ am größten ist und somit ergibt sich eine Regelzone $R_n$ mit einem aktuellen Maximal-Differenzwert $\Delta_n(t)$ (= Temperatur-Delta-Maximum). Die Heizstrahler der anderen Regelzonen können in Abhängigkeit von dem jeweils aktuellen Maximal-Differenzwert $\Delta_n(t)$ betrieben werden. Vorzugsweise kann ein geregelter Betrieb vorgesehen werden. Man kann auch von einer "Master-Slave-Regelung" sprechen. Die Regelzone mit dem Maximal-Differenzwert $\Delta_n(t)$ bildet sozusagen den "Master" und die übrigen Regelzonen jeweils einen "Slave". Beispielsweise könnte in der Figur 2 die Regelzone R1 den "Master" bilden und die übrigen Regelzonen R2, R3 und R4 die "Slaves". Je nach Aufheizrate kann im Laufe der Zeit eine andere Regelzone zum "Master" werden. Die Funktion des "Master" ist sozusagen dynamisch und nicht auf Dauer festgelegt

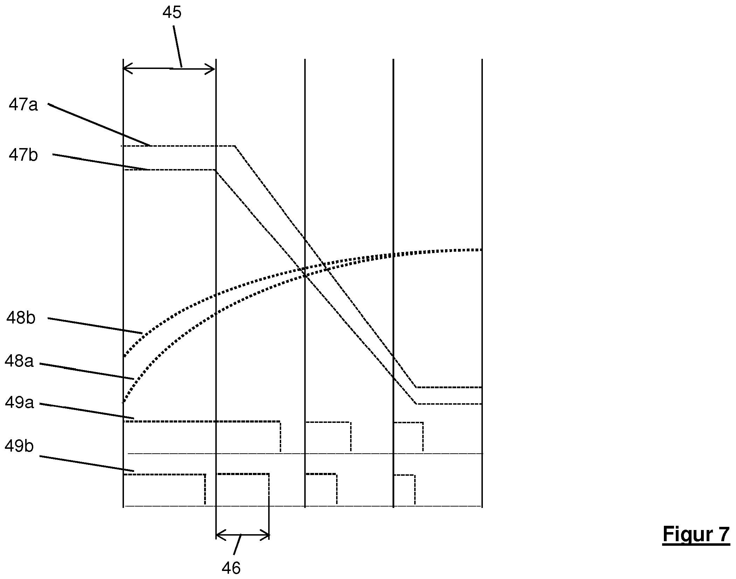

Die Figur 7 zeigt beispielhaft für zwei Regelzonen "a" und "b" den zeitlichen Verlauf der Temperatur des jeweiligen Halbzeugs sowie von zugehörigen elektrischen Größen in Bezug auf den Betrieb derjenigen Heizstrahler, die der jeweiligen Zone zugeordnet sind. Für die Regelzone "a" sind die Bezugszeichen mit dem Buchstaben "a" ergänzt und für die Regelzone "b" mit dem Buchstaben "b". Der Temperaturverlauf ist mit 48a und 48b bezeichnet. Das vom übergeordneten Regler (Synchron-Regler) errechnete Stellsignal ist mit 47a und 47b bezeichnet. Die Einschaltdauer ED der Heizstrahler ist mit 49a und 49b bezeichnet. Aus der Figur 7 ist erkennbar, wie das synchrone Aufheizen bewirkt wird. Da die Regelzone "b" sich schneller aufheizt als die Regelzone "a" sind bei der Regelzone "b" von Anfang an kürzere Pulsdauern 49b (d.h. kürzere Einschaltdauer der Heizstrahler) der Regelzone "b" vorgesehen. Diese Pulsdauern 49b der Regelzone "b" werden im weiteren Verlauf kleiner gehalten als die Pulsdauern 49a der Regelzone "a". Dadurch wird erreicht, dass am Ende des Aufheizvorgangs für beide Regelzonen "a" und "b" die gleiche Temperatur am Halbzeug erreicht worden ist.

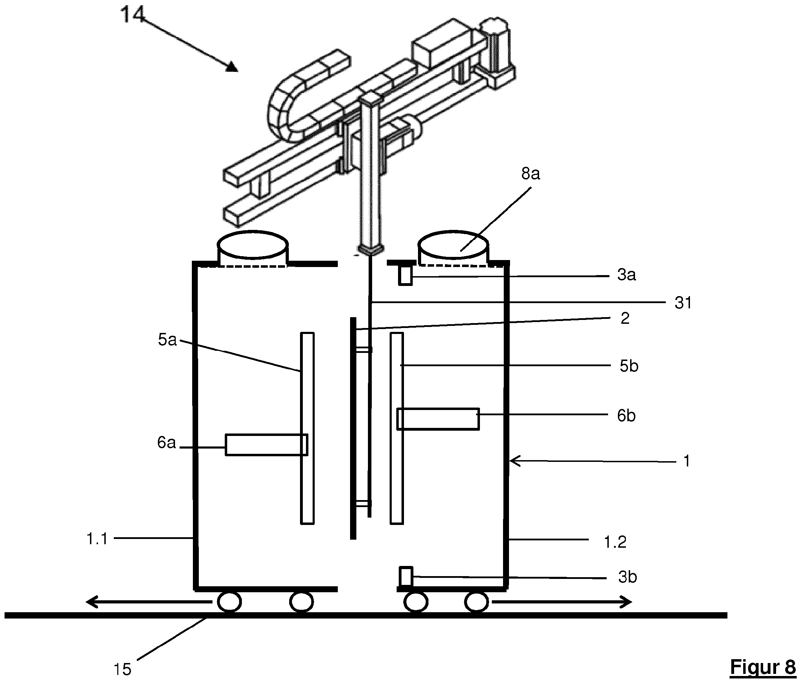

Gemäß der Figur 8 kann die Heizvorrichtung auch ein teilbares Gehäuse aufweisen. Gemäß dem vorliegenden Ausführungsbeispiel weist das Gehäuse 1 zwei Hälften 1.1 und 1.2. auf, die auseinander gefahren und zusammengefahren werden können. Die beiden Gehäusehälften sind auf Führungen 15 gelagert und können mechanisch verfahren werden. Die Figur 8 zeigt die Situation im auseinander gefahrenen Zustand und mit eingebrachtem Halbzeug 2. Sobald der Nadelgreifer oder Klemmgreifer 31 aus dem Gehäuse 1 herausgefahren worden ist, können die beiden Gehäusehälften 1.1 und 1.2 zugefahren werden, um ein geschlossenes Gehäuse 1 zu bilden.

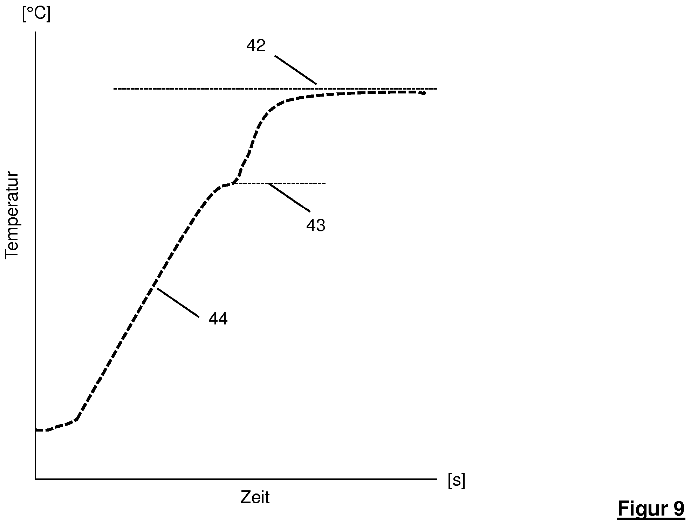

Die Figur 9 zeigt die Temperatur eines Halbzeugs über die Zeit. Die Linie 42 ist die Zieltemperatur, auf die das Halbzeug aufgeheizt werden soll. Zunächst steigt die Temperatur nahezu linear an (Linie 44). Im Bereich der Schmelztemperatur des Kunststoffmaterials im Halbzeug (siehe Linie 43) bleibt die Temperatur für eine kurze Zeit nahezu unverändert. Anschließend steigt die Temperatur wieder an und nähert sich der Zieltemperatur bei der Linie 42. Bezogen auf die Aufheizrate, d.h. die Veränderung der Temperatur über die Zeit (d$\Delta$/dt), bedeutet dies folgendes. Die Aufheizrate d$\Delta$/dt hat im Bereich der Linie 44 einen nahezu konstanten Wert W1. Im Bereich der Schmelztemperatur (Linie 43) erfolgt eine signifikante Änderung der Aufheizrate auf einen zweiten Wert W2 und ab der Schmelztemperatur im Anschluss wieder eine leichte Erhöhung auf einen dritten Wert W3. Bezüglich der Werte ist folgendes festzustellen: W1 und W3 sind deutlich größer als W2. Mit anderen Worten ausgedrückt: Der Verlauf der Aufheizrate d$\Delta$/dt hat einen deutlichen Knick im Bereich von W2. Auf Grund der Veränderung der Aufheizrate d$\Delta$/dt kann die Temperatur an diesem Punkt erfasst und mit der im Datenblatt angegebenen Schmelztemperatur des Kunststoffes des Halbzeugs verglichen werden. Wenn dabei eine Abweichung festzustellen ist, so kann ein Rückschluss auf eine Verschmutzung der Linse gezogen werden.

**Bezugszeichenliste**

| 1 | Gehäuse |
|---|---------|

(fortgesetzt)

| | |
|---|---|
| 1.1 | Linke Gehäusehälfte |
| 1.2 | Rechte Gehäusehälfte |
| 1a | linke Seitenwand |
| 1b | rechte Seitenwand |
| 1c | Gehäusedeckel |
| 1d | Gehäuseboden |
| 2 | Halbzeug |
| 3a | Oberer Ofen-Temperatursensor bzw. oberes Thermoelement |
| 3b | Unterer Ofen-Temperatursensor bzw. unteres Thermoelement |
| 4 | Spritzgießmaschine |
| 5a - 5d | Heizstrahler |
| 6, 6a - 6d | Pyrometer |
| 7 | Tür |
| 8a | Obere Gehäuseklappen |
| 8b | Untere Gehäuseklappen |
| 9 | Luftkanal |
| 9a | Zweigleitung |
| 10 | Ventilator |
| 11 | Luftkanal-Klappe |
| 12 | Trennwand |
| 13a - 13d | Regelzonen |
| 14 | Roboter |
| 15 | Mechanische Verfahreinheit |
| 20 | Heizvorrichtung |
| 21 | Erste Kammer |
| 22 | Zweite Kammer |
| 23 | Leitblech |
| 24 | Maschinenbett |
| 25 | Feststehende Formaufspannplatte |
| 26 | Bewegliche Formaufspannplatte |
| 27 | Horizontalsäule |
| 28 | Linearführung |
| 29 | Erste Spritzgießformhälfte |
| 30 | Zweite Spritzgießformhälfte |
| 31 | Nadelgreifer/Klemmgreifer |
| 32 | Formwerkzeug |
| 42 | Zieltemperatur |
| 43 | Schmelztemperatur |
| 44 | Bereich mit linearem Temperaturanstieg |

(fortgesetzt)

| 45 | Periodendauer |
|---|---|
| 46 | Pulsdauer |
| 47a | ED Stellsignal Regelzone a |
| 47b | ED Stellsignal Regelzone b |
| 48a | Temperatur Regelzone a |
| 48b | Temperatur Regelzone b |
| 49a | Pulsdauer Heizstrahler Regelzone a |
| 49b | Pulsdauer Heizstrahler Regelzone b |
| 50 | Heizstrahler mit Segmenten |
| 51, 52, 53 | Heizstrahler-Segmente |

**Patentansprüche**

1. Verfahren zur Herstellung von Formteilen, wobei ein oder mehrere Halbzeuge (2) in einer Heizvorrichtung (20) erhitzt und nachfolgend einer Formgebungsmaschine (4) zugeführt werden, wobei die Heizvorrichtung (20) ein geschlossenes Gehäuse (1) mit wenigstens einer Tür (7), oder/und mit wenigstens einer Öffnung (8a, 8b) aufweist, welche mit vom Gehäuse (1) losgelösten Mitteln verschließbar ist, oder/und wobei die Heizvorrichtung (20) ein teilbares Gehäuse aufweist, bei welchem die Gehäusebestandteile (1.1,1.2) zur Bildung einer Öffnung voneinander weg und zur Bildung eines geschlossenen Gehäuses (1) aufeinander zu bewegbar sind, wobei ein oder mehrere Heizstrahler (5a, 5b, 5c, 5d) im Inneren des Gehäuses (1) vorgesehen sind, insbesondere Infrarot-Heizstrahler, wobei das Halbzeug (2) in das Innere des Gehäuses (1) eingebracht und mit der von dem oder den Heizstrahler(n) (5a, 5b, 5c, 5d) erzeugten Wärmestrahlung beaufschlagt, erhitzt und nachfolgend aus dem Gehäuse (1) entnommen wird, wobei im Innern des Gehäuses (1) eine thermische Konvektion entsteht, welche in dem Gehäuse (1) im Wesentlichen von unten nach oben gerichtet ist, und wobei im Innern des Gehäuses (1) eine der thermischen Konvektion entgegenwirkende Luftströmung erzeugt wird, insbesondere eine Luftströmung, welche im Innern des Gehäuses (1) im Wesentlichen von oben nach unten gerichtet ist;
**dadurch gekennzeichnet, dass**
die Temperatur $T_o$ im oberen Bereich des Gehäuses (1) und die Temperatur $T_u$ im unteren Bereich des Gehäuses (1) gemessen werden, insbesondere die Temperaturen ($T_o$, $T_u$) auf der jeweiligen Innenseite von Gehäusedeckel (1c) und Gehäuseboden (1d), und dass die der thermischen Konvektion entgegenwirkende Luftströmung in Abhängigkeit von der gemessenen Temperaturdifferenz ($T_o$ - $T_u$) zwischen der Temperatur $T_o$ im oberen Bereich des Gehäuses (1) und der Temperatur $T_u$ im unteren Bereich des Gehäuses (1) geregelt wird, wobei die Regelung der Luftströmung vorzugsweise in der Weise erfolgt, dass die Temperaturdifferenz ($T_o$ - $T_u$) kleiner ist als 15°C, insbesondere kleiner als 10°C, und ganz besonders bevorzugt kleiner als 5°C.

2. Verfahren nach Anspruch 1,
**dadurch gekennzeichnet, dass**
die Luftströmung als Umluftströmung ausgebildet ist, wobei zur Umwälzung der Luft ein oder mehrere Luftkanäle (9) mit jeweils einem oder mehreren Ventilatoren (10) verwendet werden, wobei im Bereich des Gehäusebodens (1d) Luft aus dem Inneren des Gehäuses (1) abgesaugt wird, wobei die abgesaugte Luft über den oder die Luftkanäle (9) auf die Oberseite des Gehäuses (1) geleitet wird, und wobei die Luft im oberen Bereich des Gehäuses (1) in das Innere des Gehäuses (1) zurückgeführt wird.

3. Verfahren nach Anspruch 2,
**dadurch gekennzeichnet, dass**
dass die Luft über eine oder mehrere Öffnungen im Gehäuseboden (1d) aus dem Inneren des Gehäuses (1) abgesaugt wird und/oder dass die Luft über eine oder mehrere Öffnungen im Gehäusedeckel (1c) in das Innere des Gehäuses (1) zurückgeführt wird.

4. Verfahren nach einem der vorstehenden Ansprüche,
**dadurch gekennzeichnet, dass**

zur Erzeugung der Luftströmung Druckluft in das Gehäuse (1) eingebracht wird, insbesondere im unteren Bereich des Gehäuses (1), wobei vorzugsweise der Druck bzw. die Menge der in das Gehäuse (1) einströmenden Luft in Abhängigkeit von der Temperaturdifferenz ($T_o$ - $T_u$) zwischen der Temperatur $T_o$ im oberen Bereich des Gehäuses (1) und der Temperatur $T_u$ im unteren Bereich des Gehäuses (1) geregelt wird.

**5.** Verfahren nach einem der vorstehenden Ansprüche,
**dadurch gekennzeichnet, dass**
bei Überschreiten einer vorgebbaren Ofenbetriebstemperatur $T_{Betrieb}$ im Innern des Gehäuses (1) eine Zufuhr von Frischluft in das Innere des Gehäuses (1) vorgesehen wird, wobei vorzugsweise die im oberen Bereich des Gehäuses (1), insbesondere die auf der Innenseite des Gehäusedeckels (1c), gemessene Temperatur $T_o$ mit der vorgegebenen Ofenbetriebstemperatur $T_{Betrieb}$ verglichen wird.

**6.** Verfahren nach einem der vorstehenden Ansprüche,
**dadurch gekennzeichnet, dass**
bei Überschreiten einer vorgebbaren Ofenbetriebstemperatur $T_{Betrieb}$ im Innern des Gehäuses (1) eine oder mehrere am Gehäuse (1) vorgesehene Klappen (8a, 8b) und/oder eine oder mehrere am Gehäuse (1) vorgesehene Türen (7) geöffnet werden, wobei vorzugsweise die im oberen Bereich des Gehäuses (1), insbesondere die auf der Innenseite des Gehäusedeckels (1c), gemessene Temperatur $T_o$ mit der vorgegebenen Ofenbetriebstemperatur $T_{Betrieb}$ verglichen wird.

**7.** Verfahren nach einem der vorstehenden Ansprüche,
**dadurch gekennzeichnet, dass**
in dem Gehäuse (1) mehrere, unabhängig voneinander betreibbare Heizstrahler (5a, 5b, 5c, 5d) und mehrere Regelzonen $R_n$ (13a, 13b, 13c, 13d) vorgesehen sind, wobei jeder Regelzone $R_n$ (13a, 13b, 13c, 13d) genau ein Temperatursensor $TS_n$, insbesondere ein Pyrometer (6, 6a, 6b, 6c, 6d), zugeordnet ist, wobei jeder Regelzone $R_n$ (13a, 13b, 13c, 13d) ein oder mehrere Heizstrahler (5a, 5b, 5c, 5d) zugeordnet sind, wobei in jeder Regelzone $R_n$ (13a, 13b, 13c, 13d) der aktuelle Temperatur-Istwert $T_n(t)$ der Temperatur von derjenigen Oberfläche des Halbzeugs (2) gemessen wird, welche dem oder den Heizstrahler(n) (5a, 5b, 5c, 5d) der Regelzone $R_n$ (13a, 13b, 13c, 13d) zugewandt ist, wobei für diese Oberfläche ein Temperatur-Sollwert $T_n(soll)$ vorgegeben ist, wobei die Differenz zwischen dem Temperatur-Sollwert $T_n(soll)$ und dem gemessenen aktuellen Temperatur-Istwert $T_n(t)$ für diese Oberfläche des Halbzeugs (2) in der Regelzone Rn (13a, 13b, 13c, 13d) gebildet und somit für jede Regelzone (13a, 13b, 13c, 13d) ein aktueller Differenzwert $\Delta_n(t)$ (= aktuelles Temperatur-Delta) ermittelt wird, wobei diejenige Regelzone (13a, 13b, 13c, 13d) ermittelt wird, für die der aktuelle Differenzwert $\Delta_n(t)$ am größten ist und somit eine Regelzone $R_n$ (13a, 13b, 13c, 13d) mit einem aktuellen Maximal-Differenzwert $\Delta_n(t)$ (= Temperatur-Delta-Maximum) vorliegt, und wobei die Heizstrahler (5a, 5b, 5c, 5d) der anderen Regelzonen (13a, 13b, 13c, 13d) in Abhängigkeit von dem aktuellen Maximal-Differenzwert $\Delta_n(t)$ betrieben wird, wobei vorzugsweise ein geregelter Betrieb vorgesehen ist.

**8.** Verfahren nach Anspruch 7,
**dadurch gekennzeichnet, dass**
Zeitabschnitte, nachfolgend Periodendauer (45) genannt, mit einer vorgebbaren Einschaltzeitdauer, nachfolgend Pulsdauer (46) genannt, vorgegeben werden, wobei die so gebildeten Zeitabschnitte jeweils eine Periodendauer (45) für eine Pulsweitenmodulation darstellen, wobei eine Periodendauer (45) vorzugsweise kleiner als 1 Sekunde ist, insbesondere kleiner als 500 Millisekunden und ganz besonders bevorzugt kleiner oder gleich 200 Millisekunden ist, so dass ein oder mehrere oder alle einer Regelzone Rn (13a, 13b, 13c, 13d) zugeordnete Heizstrahler (5a, 5b, 5c, 5d) in Bezug auf eine Periodendauer (45) für eine vorgebbare Pulsdauer (46) betrieben werden und für den Rest der Periodendauer (45) ausgeschaltet bleiben, so dass sich in Bezug auf die Periodendauer (45) eine aktuelle Pulsdauer ED von dem einen oder den mehreren oder allen Heizstrahler(n) (5a, 5b, 5c, 5d) in der Regelzone $R_n$ (13a, 13b, 13c, 13d) in einer Periodendauer (45) ergibt.

**9.** Verfahren nach einem der Ansprüche 7 bis 8,
**dadurch gekennzeichnet, dass**
die Anzahl an Halbzeugen (2) kleiner ist als die Anzahl der vorhandenen Heizstrahler (5a, 5b, 5c, 5d) und/oder die Gesamtfläche des oder der Halbzeuge (2) kleiner ist als die von den vorhandenen Heizstrahlern (5a, 5b, 5c, 5d) beaufschlagbare Fläche, so dass es Heizstrahler gibt, die nicht benötigt werden, und dass die den nicht benötigten Heizstrahlern zugeordneten Regelzonen bei dem Betrieb der übrigen Heizstrahler bei der Ermittlung des aktuellen Maximal-Differenzwerts $\Delta_n(t)$ unberücksichtigt bleiben.

10. Verfahren nach einem der Ansprüche 7 bis 9,
**dadurch gekennzeichnet, dass**
ein übergeordneter Regler verwendet wird, mit dem alle aktiven Regelzonen $R_n$ (13a, 13b, 13c, 13d) überwacht werden, dass von Zeit zu Zeit, insbesondere bei einem geregeltem Betrieb in jeder Periodendauer (45), die Regelzone $R_n(max)$ mit dem aktuellen Maximal-Differenzwert $\Delta_n(t)$ (= Temperatur-Delta-Maximum) ermittelt wird und dass diese Regelzone $R_n(max)$ als Master-Regelzone für den Betrieb der Heizstrahler der anderen Regelzonen verwendet wird, wobei die Einschaltdauer ED der Heizstrahler(n) der anderen Regelzone Rn wie folgt berechnet wird:.

$$ED_n(t) = ED_n(max) - ED_n\Delta(t),$$

wobei:

$$ED_n\Delta(t) = ED_n(max) \times V_{synch} \times [\Delta T(max) - \Delta T_n(t)]$$

und wobei die Bestandteile dieser Formel folgende Bedeutung aufweisen:

$ED_n\Delta(t)$ = aktuell ermittelter Differenzwert an ED für den einen oder die mehreren oder alle Heizstrahler der Regelzone $R_n$
$V_{synch}$ = Verstärkungsfaktor (wird aus der maximalen Steigung einer geeigneten Regelstrecke und der Totzeit dieser Regelstrecke zur Regelzone Rn berechnet)
$\Delta T(max)$ = Maximal-Differenzwert $\Delta_n(t)$ gemäß Anspruch 7
$\Delta T_n(t)$ = aktueller Differenzwert $\Delta_n(t)$ gemäß Anspruch 7.

11. Verfahren nach einem der vorstehenden Ansprüche,
**dadurch gekennzeichnet, dass**
vor Beginn des Herstellungsverfahrens oder vor der Wiederaufnahme des Herstellungsverfahrens nach einer Produktionsunterbrechung ein Vorwärmen der Heizvorrichtung (20) erfolgt, wobei das Innere des Gehäuses (1) auf eine Vorwärmtemperatur $T_{vor}$ aufgeheizt wird, welche unterhalb einer vorgebbaren Ofenbetriebstemperatur $T_{Betrieb}$ liegt, wobei vorzugsweise eine für den vollautomatischen Betrieb der Heizvorrichtung (20) und/oder eine auf das Halbzeug (2) abgestimmte Temperatur als Ofenbetriebstemperatur $T_{Betrieb}$ zugrunde gelegt wird.

12. Verfahren nach Anspruch 11,
**dadurch gekennzeichnet, dass**
mehrere Heizstrahler (5a, 5b, 5c, 5d) betrieben und mehrere Regelzonen (13a, 13b, 13c, 13d) überwacht werden, wobei überprüft wird, ob der einer Regelzone $R_n$ zugeordnete Temperatursensor $TS_n$ von Strahlung von einem Halbzeug (2) oder von Strahlung von einem Heizstrahler (5a, 5b, 5c, 5d) einer anderen Regelzone $R_n'$ beaufschlagt wird, wobei ermittelt wird, ob ein Halbzeug (2) in dem Gehäuse (1) vorhanden ist oder nicht, und wobei bei Nichtvorhandensein von Halbzeug (2) für den oder die Temperatursensoren $TS_n$ bzw. Pyrometer (6, 6a, 6b, 6c, 6d) ein höherer Maximalwert an Temperatur vorgegeben wird als bei Vorhandensein von Halbzeug (2).

13. Verfahren nach einem der vorstehenden Ansprüche,
**dadurch gekennzeichnet, dass**
mittels eines Temperatursensors $TS_n$ einer Regelzone $R_n$ (13a, 13b, 13c, 13d) die Aufheizrate von dieser Regelzone $R_n$ zugeordnetem Halbzeug (2) überwacht und mit einer vorgegebenen Aufheizrate verglichen wird, wobei ein Differenzwert $\Delta_{Aufheiz}$ gebildet wird, indem die aktuelle Aufheizrate von der vorgegebenen Aufheizrate abgezogen wird (Aufheizrate$_{aktuell}$ - Aufheizrate$_{soll}$) und wobei beim Feststellen eines Differenzwertes $\Delta_{Aufheiz}$ :

a) in dem Fall, dass der Differenzwert $\Delta_{Aufheiz}$ negativ und betragsmäßig größer ist als ein erster vorgegebener Maximal-Differenzwert $\Delta 1_{Aufheiz(max)}$, das Vorliegen eines Defekts an dem Temperatursensor $TS_n$ angezeigt wird,
b) in dem Fall, dass der Differenzwert $\Delta_{Aufheiz}$ negativ und betragsmäßig größer ist als ein zweiter vorgegebener Maximal-Differenzwert $\Delta 2_{Aufheiz(max)}$, das Vorliegen eines Defekts an dem oder den der Regelzone $R_n$ zugeordneten Heizstrahler angezeigt wird,
c) in dem Fall, dass der Differenzwert $\Delta_{Aufheiz}$ positiv ist und betragsmäßig größer ist als ein dritter vorgegebener Maximal-Differenzwert $\Delta 3_{Aufheiz(max)}$, das Vorliegen einer fehlerhaften Positionierung des Halbzeugs und/oder

des Temperatursensors $TS_n$ angezeigt wird,

**14.** Verfahren nach einem der vorstehenden Ansprüche,
**dadurch gekennzeichnet, dass**
eine Thermokamera und ein oder mehrere Pyrometer (6, 6a, 6b, 6c, 6d) als Messmittel verwendet werden, wobei an jeder Stelle wo ein Pyrometer (6, 6a, 6b, 6c, 6d) die Oberfläche des Halbzeugs (2) misst auch eine Messstelle auf dem Thermobild definiert wird.

**15.** Verfahren nach einem der vorstehenden Ansprüche,
**dadurch gekennzeichnet, dass**
die Aufheizrate kontinuierlich überwacht wird, wobei im Bereich der Schmelztemperatur des Halbzeugs (2) eine signifikante Änderung der Aufheizrate und ab der Schmelztemperatur im Anschluss daran eine leichte Erhöhung der Aufheizrate detektiert wird, wobei aufgrund der Veränderung $d\Delta/dt$ der Aufheizrate die Temperatur an diesem Punkt erfasst und mit einer in einem Datenblatt angegebenen Schmelztemperatur des Kunststoffes des Halbzeugs (2) verglichen wird, wobei vorzugsweise eine Verschmutzung der Pyrometerlinse angezeigt wird, wenn eine Abweichung zwischen der erfassten Temperatur und der Temperatur aus dem Datenblatt vorliegt.

**16.** Verfahren nach einem der vorstehenden Ansprüche,
**dadurch gekennzeichnet, dass**
sukzessiv Halbzeuge (2) in das Gehäuse (1) eingebracht, an einer vorgebbaren Position angeordnet und erhitzt werden, wobei diese Halbzeuge (2) jeweils einer oder mehreren Regelzonen $R_n$ (13a, 13b, 13c, 13d) zugeordnet sind, wobei mittels eines Temperatursensors $TS_n$ einer Regelzone $R_n$ die jeweilige Aufheizrate eines Halbzeugs (2) überwacht wird, wobei die zeitliche Veränderung $d\Delta/dt$ des Differenzwert $\Delta_{Aufheiz}$ der Aufheizrate überwacht wird

**17.** Verfahren nach einem der vorstehenden Ansprüche,
**dadurch gekennzeichnet, dass**
für eine vorgebbare Zeitdauer zunächst eine Luftströmung in Richtung der freien Konvektion vorgesehen wird und dass kurz vor Erreichen der Schmelztemperatur des Halbzeugs (2) die Richtung der Luftströmung umgekehrt und eine der thermischen Konvektion entgegenwirkende Luftströmung erzeugt wird.

## Claims

**1.** A method for manufacturing moulded parts, wherein one or several semi-finished products (2) are heated in a heating device (20) and subsequently fed to a shaping machine (4), wherein the heating device (20) has a closed housing (1) with at least one door (7), or/and with at least one opening (8a, 8b, which can be closed with means detached from the housing (1), or/and wherein the heating device (20) has a dividable housing, in which the housing components (1.1, 1.2) can be moved away from each other to form an opening and toward each other to form a closed housing (1), wherein one or more radiant heaters (5a, 5b, 5c, 5d) are provided in the interior of the housing (1), in particular infrared radiant heaters, wherein the semi-finished product (2) is introduced into the interior of the housing (1) and acted upon by the thermal radiation generated by the radiant heater(s) (5a, 5b, 5c, 5d), heated and subsequently removed from the housing (1), wherein a thermal convection arises in the interior of the housing (1), which is directed substantially upward in the housing (1), and wherein an air flow counteracting the thermal convection , in particular an air flow directed substantially downward in the interior of the housing (1) is produced in the interior of the housing (1);
**characterized in that**
the temperature $T_o$ in the upper region of the housing (1) and the temperature $T_u$ in the lower region of the housing (1) are measured, in particular the temperatures ($T_o$, $T_u$) on the respective interior side of the housing cover (1c) and housing floor (1d), and that the air flow counteracting the thermal convection is regulated as a function of the measured temperature difference ($T_o$-$T_u$) between the temperature $T_o$ in the upper region of the housing (1) and the temperature $T_u$ in the lower region of the housing (1), wherein the air flow is preferably regulated in such a way that the temperature difference ($T_o$-$T_u$) is less than 15 °C, in particular less than 10 °C, and most particularly less than 5 °C.

**2.** The method according to Claim 1,
**characterized in that**
the air flow is formed as a flow of circulating air, wherein one or several air channels (9) each with one or several ventilators (10) are used for circulating the air, wherein air in the region of the housing floor (1d) is suctioned out of the interior of the housing (1), wherein the suctioned air is directed to the upper side of the housing (1) via the air channel(s) (9), and wherein the air in the upper region of the housing (1) is returned to the interior of the housing (1).

3. The method according to Claim 2,
**characterized in that**
the air is suctioned out of the interior of the housing (1) via one or several openings in the housing floor (1d) and/or that the air is returned to the interior of the housing (1) via one or several openings in the housing cover (1c).

4. The method according to one of the preceding claims,
**characterized in that**
compressed air is introduced into the housing (1) so as to generate the air flow, in particular in the lower region of the housing (1), wherein preferably the pressure or respectively the quantity of air flowing into the housing (1) is regulated as a function of the temperature difference $(T_o-T_u)$ between the temperature $T_o$ in the upper region of the housing (1) and the temperature $T_u$ in the lower region of the housing (1).

5. The method according to one of the preceding claims,
**characterized in that**
a supply of fresh air into the interior of the housing (1) is provided when a presettable furnace operating temperature $T_{operating}$ has been exceeded in the interior of the housing (1), wherein preferably the temperature $T_o$ measured in the upper region of the housing (1), in particular on the interior side of the housing cover (1c) is compared with the preset furnace operating temperature $T_{operating}$.

6. The method according to one of the preceding claims,
**characterized in that**
one or several flaps (8a, 8b) provided on the housing (1) and/or one or several doors (7) provided on the housing (1) are opened when a presettable furnace operating temperature $T_{operating}$ in the interior of the housing (1) has been exceeded, wherein preferably the temperature $T_o$ measured in the upper region of the housing (1) in particular on the interior side of the housing cover (1c), is compared with the preset furnace operating temperature $T_{operating}$.

7. The method according to one of the preceding claims,
**characterized in that**
several radiant heaters (5a, 5b, 5c, 5d) that can be operated independently of each other and several regulating zones $R_n$ (13a, 13b, 13c, 13d) are provided in the housing (1), wherein each regulating zone $R_n$ (13a, 13b, 13c, 13d) has allocated to it precisely one temperature sensor $TS_n$, in particular a pyrometer (6, 6a, 6b, 6c, 6d), wherein each regulating zone $R_n$ (13a, 13b, 13c, 13d) has allocated to it one or several radiant heaters (5a, 5b, 5c, 5d), wherein in each regulating zone $R_n$ (13a, 13b, 13c, 13d) the current actual temperature value $T_n(t)$ of the temperature of the surface of the semi-finished product (2) that faces the radiant heater (s) (5a, 5b, 5c, 5d) of the regulating zone $R_n$ (13a, 13b, 13c, 13d) is measured, wherein a desired temperature value $T_n(desired)$ is preset for this surface, wherein the difference between the desired temperature value $T_n(desired)$ and the measured current actual temperature value $T_n(t)$ for this surface of the semi-finished product (2) in the regulating zone $R_n$ (13a, 13b, 13c, 13d) is formed, and a current difference value $\Delta_n(t)$ (= current temperature delta)) is thus determined for each regulating zone (13a, 13b, 13c, 13d), wherein the regulating zone (13a, 13b, 13c, 13d) for which the current difference value $\Delta_n(t)$ is the greatest is determined and therefore a regulating zone $R_n$ (13a, 13b, 13c, 13d) with a current maximum difference value $\Delta_n(t)$ (= temperature delta maximum) is present, and wherein the radiant heaters (5a, 5b, 5c, 5d) of the other regulating zones (13a, 13b, 13c, 13d) are operated as a function of the current maximum difference value $\Delta_n(t)$, wherein preferably a regulated operation is provided.

8. The method according to Claim 7,
**characterized in that**
time segments, hereinafter referred to as period durations (45), with a presettable activation time duration, hereinafter referred to as pulse duration (46), are preset, wherein the thus formed time segments each represent a period duration (45) for a pulse width modulation, wherein a period duration (45) is preferably less than 1 second, in particular less than 500 milliseconds, and most particularly preferably less than or equal to 200 milliseconds, so that one or several or all of the radiant heaters (5a, 5b, 5c, 5d) allocated to a regulating zone $R_n$ (13a, 13b, 13c, 13d) are operated for a presettable pulse duration (46) relative to a period duration (45), and remain deactivated for the remainder of the period duration (45), so that, in relation to the period duration (45), a current pulse duration ED of the one or several or all radiant heater (s) (5a, 5b, 5c, 5d) is produced in the regulating zone $R_n$ (13a, 13b, 13c, 13d) in a period duration (45).

9. The method according to one of Claims 7 to 8,
**characterized in that**
the number of semi-finished products (2) is less than the number of present radiant heaters (5a, 5b, 5c, 5d) and/or the overall surface of the semi-finished product(s) (2) is smaller than the surface that can be acted upon by the present radiant heaters (5a, 5b, 5c, 5d), so that there are radiant heaters that are not required, and that the regulating zones allocated to the unrequired radiant heaters remain unconsidered during operation of the remaining radiant heaters while determining the current maximum difference value $\Delta_n(t)$.

10. The method according to one of Claims 7 to 9,
**characterized in that**
a superordinate regulator is used, with which all active regulating zones $R_n$ (13a, 13b, 13c, 13d) are monitored, that from time to time, in particular in each period duration (45) with a regulated operation, the regulating zone $R_n(max)$ is determined with the current maximum difference value $\Delta_n(t)$ (= temperature-delta-maximum), and that this regulating zone $R_n(max)$ is used as the master regulating zone for operating the radiant heaters of the other regulating zones, wherein the activation duration ED of the radiant heater (s) of the other regulating zone $R_n$ is calculated as follows:

$$ED_n(t)=ED_n(max)-ED_n\Delta(t),$$

wherein:

$$ED_n\Delta(t)=ED_n(max) \times V_{synch} \times [\Delta T(max) - \Delta T_n(t)]$$

and wherein the components of this formula have the following meaning:

$ED_n\Delta(t)$= currently determined difference value ED for the one or several or all radiant heaters of regulating zone $R_n$
$V_{synch}$ = amplification factor (calculated from the maximum gradient of a suitable regulating section and the dead time of this regulating section for the regulating zone $R_n$)
$\Delta T(max)$ = maximum difference value $\Delta_n(t)$ according to Claim 7,
$\Delta T_n(t)$ = current difference value $\Delta_n(t)$ according to Claim 7.

11. The method according to one of the preceding claims,
**characterized in that**
a preheating of the heating device (20) takes place before the production method starts or before the production method resumes after an interruption in production, wherein the interior of the housing (1) is heated to a preheating temperature $T_{pre}$ lying below a presettable furnace operating temperature $T_{operating}$, wherein preferably a temperature for the fully automatic operation of the heating device (20) and/or adjusted to the semi-finished product (2) is taken as the basis for the furnace operating temperature $T_{operating}$.

12. The method according to Claim 11,
**characterized in that**
several radiant heaters (5a, 5b, 5c, 5d) are operated and several regulating zones (13a, 13b, 13c, 13d) are monitored, wherein a check is performed as to whether the temperature sensor $TS_n$ allocated to a regulating zone $R_n$ is acted upon by radiation from a semi-finished product (2) or by radiation from a radiant heater (5a, 5b, 5c, 5d) of another regulating zone $R_n'$, wherein it is determined whether a semi-finished product (2) is present in the housing (1) or not, and wherein, if semi-finished product (2) is not present, a higher maximum value for temperature is preset for the temperature sensor(s) $TS_n$ or respectively pyrometer(s) (6, 6a, 6b, 6c, 6d) than if semi-finished product (2) is present.

13. The method according to one of the preceding claims,
**characterized in that**
by means of a temperature sensor $TS_n$ of a regulating zone $R_n$ (13a, 13b, 13c, 13d), the heating rate of semi-finished product (2) allocated by this regulating zone $R_n$ is monitored and compared with a preset heating rate, wherein a difference value $\Delta_{heating}$ is formed by subtracting the current heating rate from the preset heating rate (heating rate$_{current}$ - heating rate$_{desired}$), and wherein, if a difference value $\Delta_{heating}$ is determined:

a) in the case where the difference value $\Delta_{heating}$ is negative and quantitatively greater than a first preset maximum difference value $\Delta 1_{heating(max)}$, the presence of a defect is displayed on the temperature sensor TS$_n$,

b) in the case where the difference value $\Delta_{heating}$ is negative and quantitatively greater than a second preset maximum difference value $\Delta 2_{heating(max)}$, the presence of a defect is displayed on the radiant heater(s) allocated to the regulating zone R$_n$,

c) in the case where the difference value $\Delta_{heating}$ is positive and quantitively greater than a third preset maximum difference value $\Delta 3_{heating(max)}$, the presence of a faulty positioning of the semi-finished product and/or of the temperature sensor TS$_n$ is displayed.

14. The method according to one of the preceding claims,
**characterized in that**
a thermal camera and one or several pyrometers (6, 6a, 6b, 6c, 6d) are used as the measuring means, wherein a measuring point on the thermal image is also defined at each location where a pyrometer (6, 6a, 6b, 6c, 6d) measures the surface of the semi-finished product (2).

15. The method according to one of the preceding claims,
**characterized in that**
the heating rate is continuously monitored, wherein a significant change, in the heating rate takes place in the range of the melting temperature of the semi-finished product (2), and starting from the melting temperature subsequently a slight increase in the heating rate is detected, wherein the temperature is detected at this point based on the change d$\Delta$/dt of the heating rate, and compared with a melting temperature of the plastic of the semi-finished product (2) indicated in a data sheet, wherein preferably a contamination of the pyrometer lens is displayed when a deviation is present between the detected temperature and the temperature from the data sheet.

16. The method according to one of the preceding claims,
**characterized in that**
semi-finished product(s) (2) are successively introduced into the housing (1), arranged at a presettable position and heated, wherein these semi-finished products (2) are each allocated to one or several regulating zones R$_n$ (13a, 13b, 13c, 13d) wherein by means of a temperature sensor TS$_n$ of a regulating zone R$_n$ the respective heating rate of a semi-finished product (2) is monitored, wherein the change d$\Delta$/dt over time of the difference value $\Delta_{heating}$ of the heating rate is monitored.

17. The method according to one of the preceding claims,
**characterized in that**
firstly an air flow in the direction of the free convection is provided for a presettable period of time, and that the direction of the air flow is reversed and an air flow that counteracts the thermal convection is generated shortly before reaching the melting temperature of the semi-finished product (2).

**Revendications**

1. Procédé de fabrication de pièces moulées, dans lequel une ou plusieurs pièce(s) semi-finie(s) (2) sont chauffées dans un dispositif de chauffage (20) et dirigées ensuite vers une machine de moulage (4), dans lequel le dispositif de chauffage (20) présente un logement (1) fermé avec au moins une porte (7) et/ou au moins une ouverture (8a, 8b), laquelle peut être fermée avec des moyens séparés du logement (1), et/ou dans lequel le dispositif de chauffage (20) présente un logement divisible dans lequel les composantes de logement sont mobiles (1.1, 1.2) en s'éloignant l'une de l'autre pour former une ouverture et en se rapprochant l'une de l'autre pour former un logement (1) fermé, dans lequel un ou plusieurs radiateurs (5a, 5b, 5c, 5d) sont prévus à l'intérieur du logement (1), en particulier des radiateurs à infrarouges, dans lequel la pièce semi-finie (2) est placée dans l'intérieur du logement (1) et reçoit le rayonnement thermique produit par le ou les radiateur(s) (5a, 5b, 5c, 5d), et sortie ensuite du logement (1), dans lequel il se produit à l'intérieur du logement (1) une convection thermique qui est dirigée essentiellement du bas vers le haut dans le logement (1) et dans lequel à l'intérieur du logement(1), un écoulement d'air agissant contre la convection thermique est produit, en particulier un écoulement d'air qui est essentiellement dirigé du haut vers le bas à l'intérieur du logement (1),
**caractérisé en ce que**
la température $T_o$ dans la partie supérieure du logement (1) et la température $T_u$ dans la partie inférieure du logement (1) sont mesurées, en particulier les températures ($T_o$, $T_u$) sur la face intérieure respective du couvercle de logement (le) et du fond de logement (1d), et que l'écoulement d'air agissant contre la convection thermique est réglé en fonction de la différence de température ($T_o$ - $T_u$) mesurée entre la température $T_o$ dans la partie supérieure du logement (1) et la température $T_u$ dans la partie inférieure du logement (1), dans lequel la régulation de l'écoulement d'air s'effectue de préférence de façon à ce que la différence de température ($T_o$ - $T_u$) soit inférieure à 15 °C, en particulier inférieure à 10 °C, et tout particulièrement inférieure à 5 °C.

**2.** Procédé selon la revendication 1,
**caractérisé en ce que**
l'écoulement d'air est conçu en tant qu'écoulement d'air de circulation, dans lequel pour faire circuler l'air, un canal ou plusieurs canaux d'air (9) avec respectivement un ou plusieurs ventilateur(s) (10) est/sont employé(s), dans lequel au niveau du fond de logement (1d), de l'air est aspiré hors de l'intérieur du logement (1), dans lequel l'air aspiré est dirigé sur le dessus du logement (1) par le canal ou les canaux d'air (9), et dans lequel l'air dans la partie supérieure du logement (1) est renvoyé à l'intérieur du logement (1).

**3.** Procédé selon la revendication 2,
**caractérisé en ce que** l'air est aspiré hors de l'intérieur du logement (1) par une ou plusieurs ouverture (s) dans le fond de logement (1d) et/ou que l'air est renvoyé à l'intérieur du logement (1) par une ou plusieurs ouverture (s) dans le couvercle de logement (1c).

**4.** Procédé selon l'une des revendications précédentes,
**caractérisé en ce que**
pour produire l'écoulement d'air, de l'air comprimé est injecté dans le logement (1), en particulier dans la partie inférieure du logement (1), dans lequel de préférence la pression, respectivement la quantité de l'air entrant dans le logement (1) est réglée en fonction de la différence de température ($T_o$ - $T_u$) entre la température $T_o$ dans la partie supérieure du logement (1) et la température $T_u$ dans la partie inférieure du logement (1).

**5.** Procédé selon l'une des revendications précédentes,
**caractérisé en ce qu'**en cas de dépassement d'une température de fonctionnement de four $T_{Fonctionnement}$ pouvant être prédéfinie à l'intérieur du logement (1), une amenée d'air neuf à l'intérieur du logement (1) est prévue, dans lequel de préférence, la température $T_o$ mesurée dans la partie supérieure du logement (1), en particulier sur la face intérieure du couvercle de logement (le), est comparée à la température de fonctionnement de four $T_{Fonctionnement}$ prédéfinie.

**6.** Procédé selon l'une des revendications précédentes,
**caractérisé en ce qu'**en cas de dépassement d'une température de fonctionnement de four $T_{Fonctionnement}$ pouvant être prédéfinie à l'intérieur du logement (1), un ou plusieurs volet (s) (8a, 8b) prévu(s) sur le logement (1) et/ou une ou plusieurs porte(s) (7) prévue (s) sur le logement (1) est/sont ouvert (e) (s), dans lequel de préférence, la température $T_o$ mesurée dans la partie supérieure du logement (1), en particulier sur la face intérieure du couvercle de logement (1e), est comparée à la température de fonctionnement de four $T_{Fonctionnement}$ prédéfinie.

**7.** Procédé selon l'une des revendications précédentes,
**caractérisé en ce que**
dans le logement (1), plusieurs radiateurs (5a, 5b, 5c, 5d) pouvant fonctionner indépendamment l'un de l'autre et plusieurs zones de réglage $R_n$ (13a, 13b, 13c, 13d) sont prévus, dans lequel à chaque zone de réglage $R_n$ (13a, 13b, 13c, 13d) correspond précisément un capteur de température $TS_n$, en particulier un pyromètre (6, 6a, 6b, 6c, 6d), dans lequel à chaque zone de réglage $R_n$ (13a, 13b, 13c, 13d) correspond un ou plusieurs radiateur(s) (5a, 5b, 5c, 5d), dans lequel dans chaque zone de réglage $R_n$ (13a, 13b, 13c, 13d), la valeur réelle de température actuelle $T_n(t)$ de la température de la surface de la pièce semi-finie (2) qui est tournée vers le ou les radiateurs (5a, 5b, 5c, 5d) de la zone de réglage $R_n$ (13a, 13b, 13c, 13d) est mesurée, dans lequel pour cette surface, une valeur de consigne de température $T_n$(consigne) est définie, dans lequel la différence entre la valeur de consigne de température $T_n$(consigne) et la valeur réelle de température actuelle $T_n(t)$ mesurée est formée pour cette surface de la pièce semi-finie (2) dans la zone de réglage $R_n$ (13a, 13b, 13c, 13d) et ainsi pour chaque zone de réglage (13a, 13b, 13c, 13d), une valeur différentielle actuelle $\Delta_n(t)$ (= delta actuel de température) est calculée, dans lequel la zone de réglage (13a, 13b, 13c, 13d) est calculée, pour laquelle la valeur différentielle actuelle $\Delta_n(t)$ est la plus grande et ainsi une zone de réglage $R_n$ (13a, 13b, 13c, 13d) avec une valeur différentielle maximale actuelle $\Delta_n(t)$ (= delta de température maximal) est présente, et dans lequel les radiateurs (5a, 5b, 5c, 5d) des autres zones de réglage (13a, 13b, 13c, 13d) fonctionnent en fonction de la valeur différentielle maximale actuelle $\Delta_n(t)$, dans lequel

de préférence un fonctionnement régulé est prévu.

8. Procédé selon la revendication 7,
**caractérisé en ce que**
des temps, dénommés ci-après périodes (45), sont définis avec une durée de temps d'allumage pouvant être prédéfinie, dénommée ci-après durée d'impulsion (46), dans lequel les temps ainsi formés représentent respectivement une période (45) pour une modulation de largeur d'impulsion, dans lequel une période (45) est de préférence inférieure à 1 seconde, en particulier inférieure à 500 millisecondes et de manière tout particulièrement préférée inférieure ou égale à 200 millisecondes, de sorte qu'un ou plusieurs ou tous les radiateurs (5a, 5b, 5c, 5d) correspondant à une zone de réglage $R_n$ (13a, 13b, 13c, 13d) fonctionnent par rapport à une période (45) pour une durée d'impulsion (46) pouvant être prédéfinie et restent éteints pour le reste de la période (45), de sorte qu'une durée d'impulsion actuelle ED de l'un ou de plusieurs ou de tous les radiateurs (5a, 5b, 5c, 5d) est fournie en rapport à la période (45) dans la zone de réglage $R_n$ (13a, 13b, 13c, 13d) dans une période (45).

9. Procédé selon la revendication 7 à 8,
**caractérisé en ce que**
le nombre des pièces semi-finies (2) est inférieur au nombre des radiateurs (5a, 5b, 5c, 5d) présents et/ou la surface totale de la ou de plusieurs pièce(s) semi-finie (s) (2) est inférieure à la surface pouvant être atteinte par les radiateurs (5a, 5b, 5c, 5d) présents, de sorte qu'il y a des radiateurs qui ne sont pas nécessaires et que les zones de réglage correspondant aux radiateurs non nécessaires ne sont pas prises en compte dans le calcul de la valeur différentielle maximale actuelle $\Delta_n(t)$ lors du fonctionnement des radiateurs restants.

10. Procédé selon l'une des revendications 7 à 9,
**caractérisé en ce**
**qu'**un régulateur maître est employé, avec lequel toutes les zones de réglage $R_n$ (13a, 13b, 13c, 13d) actives sont surveillées, en ce que de temps en temps, en particulier avec un fonctionnement régulé dans chaque période (45), la zone de réglage $R_n(max)$ est calculée avec la valeur différentielle maximale actuelle $\Delta_n(t)$ (= delta de température maximal) et en ce que cette zone de réglage $R_n(max)$ est employée en tant que zone de réglage maître pour le fonctionnement des radiateurs des autres zones de réglage, dans lequel la durée d'allumage ED du/des radiateur(s) de l'autre zone de réglage $R_n$ est calculée comme suit :

$$\mathrm{ED_n(t) \ = \ ED_n(max) \ - \ ED_n\Delta(t),}$$

dans lequel :

$$\mathrm{ED_n\Delta(t) \ = \ ED_n(max) \ x \ V_{synch} \ x \ [\Delta T(max) \ - \ \Delta T_n(t)]}$$

et dans lequel les composantes de cette formule signifient ce qui suit :

$ED_n\Delta(t)$ = valeur différentielle actuelle calculée sur ED pour le ou plusieurs ou tous les radiateurs de la zone de réglage $R_n$
$V_{synch}$ = facteur de renforcement (est calculé à partir de la pente maximale d'un trajet de réglage approprié et du temps mort de ce trajet de réglage vers la zone de réglage $R_n$)
$\Delta T(max)$ = valeur différentielle maximale $\Delta_n(t)$ selon la revendication 7
$\Delta T_n(t)$ = valeur différentielle actuelle $\Delta_n(t)$ selon la revendication 7.

11. Procédé selon l'une des revendications précédentes,
**caractérisé en ce**
**qu'**avant le début de la procédure de fabrication ou avant la reprise du procédé de fabrication après une interruption de production, un pré-chauffage du dispositif de chauffage (20) est effectué, dans lequel l'intérieur du logement (1) est chauffé à une température de pré-chauffage $T_{avant}$ qui est en-dessous d'une température de fonctionnement de four $T_{Fonctionnement}$ pouvant être prédéfinie, dans lequel de préférence on se base sur une température ajustée au fonctionnement entièrement automatisé du dispositif de chauffage (20) et/ou une température ajustée à la pièce semi-finie (2) en tant que température de fonctionnement de four $T_{Fonctionnement}$.

**12.** Procédé selon la revendication 11,
**caractérisé en ce que**
plusieurs radiateurs (5a, 5b, 5c, 5d) fonctionnent et plusieurs zones de réglage $R_n$ (13a, 13b, 13c, 13d) sont surveillées, dans lequel il est surveillé si le capteur de température $TS_n$ correspondant à une zone de réglage $R_n$ reçoit le rayonnement d'une pièce semi-finie (2) ou le rayonnement d'un radiateur (5a, 5b, 5c, 5d) d'une autre zone de réglage $R_n'$, dans lequel il est surveillé si une pièce semi-finie (2) est présente ou non dans le logement (1), et dans lequel en cas de non-présence de la pièce semi-finie (2), une valeur maximale supérieure de température est prédéfinie pour le ou les capteur(s) de température $TS_n$ respectivement pyromètre(s) (6, 6a, 6b, 6c, 6d), qu'en présence de pièce semi-finie (2).

**13.** Procédé selon l'une des revendications précédentes,
**caractérisé en ce qu'**au moyen d'un capteur de température $TS_n$ d'une zone de réglage $R_n$ (13a, 13b, 13c, 13d), le taux de mise en température de la pièce semi-finie (2) correspondant à cette zone de réglage $R_n$ est surveillé et comparé à un taux de mise en température prédéfini, dans lequel une valeur différentielle $\Delta_{\text{Mise en température}}$ est formée, le taux de mise en température actuel étant retiré du taux de mise en température prédéfini (taux de mise en température$_{\text{actuel}}$ - taux de mise en température$_{\text{de consigne}}$) et dans lequel en cas de constatation d'une valeur différentielle $\Delta_{\text{Mise en température}}$ :

a) dans le cas où la valeur différentielle $\Delta_{\text{Mise en température}}$ est négative et relativement supérieure à une première valeur différentielle maximale $\Delta 1_{\text{Mise en température (max)}}$ prédéfinie, la présence d'un défaut sur le capteur de température $TS_n$ est affichée,
b) dans le cas où la valeur différentielle $\Delta_{\text{Mise en température}}$ est négative et relativement supérieure à une deuxième valeur différentielle maximale $\Delta 2_{\text{Mise en température (max)}}$ prédéfinie, la présence d'un défaut sur le ou les radiateur (s) correspondant à la zone de réglage $R_n$ est affichée,
c) dans le cas où la valeur différentielle $\Delta_{\text{Mise en température}}$ est positive et relativement supérieure à une troisième valeur différentielle maximale $\Delta 3_{\text{Mise en température(max)}}$ prédéfinie, la présence d'un mauvais positionnement de la pièce semi-finie et/ou du capteur de température $TS_n$ est affichée.

**14.** Procédé selon l'une des revendications précédentes,
**caractérisé en ce qu'**une caméra thermique et un ou plusieurs pyromètre(s) (6, 6a, 6b, 6c, 6d) sont employés en tant que moyens de mesure, dans lequel à chaque endroit où un pyromètre (6, 6a, 6b, 6c, 6d) mesure la surface de la pièce semi-finie (2), un point de mesure est également défini sur l'image thermique.

**15.** Procédé selon l'une des revendications précédentes,
**caractérisé en ce que** le taux de mise en température est surveillé en continu, dans lequel dans la plage de température de fusion de la pièce semi-finie (2), une modification significative, du taux de mise en température est détectée et à partir de la température de fusion consécutive, une légère augmentation du taux de mise en température est détectée, dans lequel en raison de la modification $d\Delta/dt$ du taux de mise en température, la température en ce point est détectée et comparée à une température de fusion du plastique de la pièce semi-finie (2) indiquée dans une fiche de données, dans lequel de préférence, un encrassement de la lentille de pyromètre est affiché lorsqu'il y a un écart entre la température détectée et la température de la fiche technique.

**16.** Procédé selon l'une des revendications précédentes,
**caractérisé en ce que** des pièces semi-finies (2) successives sont placées dans le logement (1), disposées à une position pouvant être prédéfinie et chauffées, dans lequel ces pièces semi-finies (2) correspondent respectivement à une ou plusieurs zone(s) de réglage $R_n$ (13a, 13b, 13c, 13d), dans lequel au moyen d'un capteur de température $TS_n$ d'une zone de réglage $R_n$, le taux de mise en température respective d'une pièce semi-finie (2) est surveillé, dans lequel la modification temporelle $d\Delta/dt$ de la valeur différentielle $\Delta_{\text{Mise en température}}$ du taux de mise en température est surveillée.

**17.** Procédé selon l'une des revendications précédentes,
**caractérisé en ce que** pour une durée pouvant être prédéfinie, un écoulement d'air est d'abord prévu en direction de la convection libre et que peu après que la température de fusion de la pièce semi-finie (2) est atteinte, le sens de l'écoulement d'air est inversé et un écoulement d'air agissant contre la convection thermique est produit.

EP 3 527 040 B1

**Figur 1**

**Figur 2**

13a = R1

13c = R3

6

3a

6

5a

5c

2

5b

5d

1

6

3b

6

13b = R2

13d = R4

26

EP 3 527 040 B1

Figur 3

Figur 4a

Figur 4b

Figur 4c

Figur 4d

EP 3 527 040 B1

**Figur 5**

EP 3 527 040 B1

**Figur 6**

Figur 7

EP 3 527 040 B1

14

8a

3a

31

2

5a

5b

6b

6a

1

1.1

1.2

3b

15

**Figur 8**

Figur 9

EP 3 527 040 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014010173 A1
- CA 2545440 A1